# EUROPEAN PATENT APPLICATION

(11) **EP 1 306 767 A1**
(43) Date of publication of application: **02.05.2003**
(21) Application number: 01954418.8
(22) Date of filing: 02.08.2001
(51) Int. Cl.: G06F 15/00, G06F 1/00, G06F 9/06, G06F 12/00, H04N 7/16

(54) **EXPIRATION DATE MANAGEMENT SYSTEM AND APPARATUS THEREFOR**

(30) Priority: 04.08.2000 JP 2000237307; 30.11.2000 JP 2000366287; 23.04.2001 JP 2001125104
(71) Applicant: MATSUSHITA ELECTRIC INDUSTRIAL CO., LTD., Kadoma-shi, Osaka 571-8501 (JP)
(72) Inventor: SAKATA, Tsuyoshi, Yokohama-shi, Kanagawa 241-0816 (JP); OKAMURA, Kazuo, Kawasaki-shi, Kanagawa 213-0013 (JP); HIDAKA, Noriyuki, Yawata-shi, Kyoto 614-8332 (JP); MORIOKA, Mikio, Ohta-ku, Tokyo 144-0046 (JP)
(74) Representative: Betten & Resch
(86) International application number: JP0106674
(87) International publication number: WO02013028

(57) **Abstract**

The present invention provides an expiration date monitoring system capable of monitoring an expiration date of a terminal by an effective method. According to an expiration date monitoring system comprising a terminal and a server for monitoring an expiration date of this terminal, the server monitors the expiration date for each terminal, for each function of the terminal and for each content. The terminal receives a renewal command of the expiration date from the server and stores the renewed expiration date of each function. Then, the terminal can activate the terminal itself, each function of the terminal and the access to the content when the current date (current time) is within the expiration date thereof. Alternatively, as a part of the monitoring of the expiration date, it is possible to secure a communication opportunity of making an access from a terminal side to a server side, so that it becomes possible that the server collects the data of the terminal by the use of this opportunity or the necessary software is transferred from the server to the terminal.

## Description

### Field of the Invention

The present invention relates to a system for monitoring an expiration date of a terminal device. This system includes a server and a terminal device. More particularly, and the present invention relates to a method and apparatus such that the terminal device can periodically access the server for monitoring the expiration date via a communication circuit or line.

### Description of the Prior Art

According to a conventional pay broadcasting system, a pay-per-view system has come into practical use such that a scrambled program is broadcast, a key for unscrambling the broadcast is communicated to a viewer from a broadcast center in advance and the program which is viewed by the viewer is charged. Therefore, others cannot view the program.

According to this system, the charge is paid after the event is broadcast and viewed, so that a viewing history is recorded in an IC card, which is fitted in a receiving device, this viewing history is periodically transmitted from the receiving device to the broadcast center via a telephone line and the broadcast center draws the viewing charge from a bank account or the like of a user on the basis of this viewing history.

Japanese Patent Application Laid-Open No. 9-298733 discloses a system for also transmitting the information other than the viewing history information to the transmission side by the use of the telephone line for uplinking the viewing history information from a reception terminal to the transmission side system.

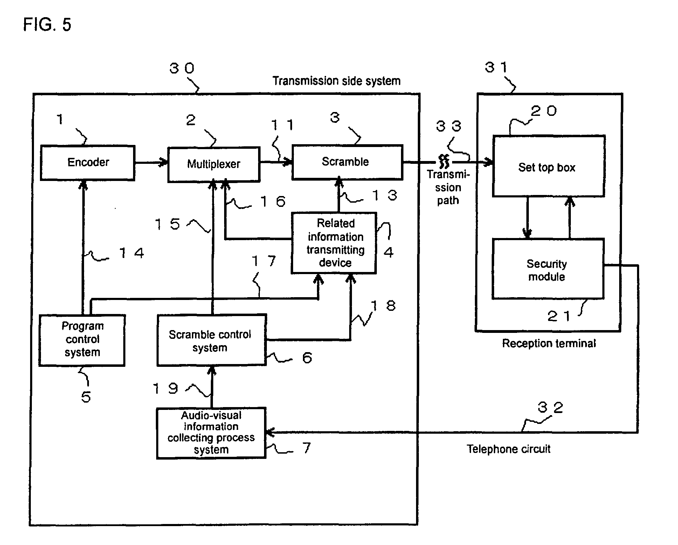

As shown in FIG. 5, in this system, a transmission side system 30 is connected to a reception terminal 31 via a transmission path 33 by the use of a broadcasting wave (in the case of a cable television, a transmission cable) and a telephone line 32 for uplinking.

In the transmission side system 30, an encoder 1 encodes an audio-video signal of a program under the control of a program control system 5. Alternatively, a scrambler control system 6 outputs a work key 18 for encrypting a scramble key to a related information transmitting device 4. Scrambler control system further encrypts this work key by means of an individual key which is specific for the individual reception terminal 31 (the scramble control system 6 stores the individual keys for all reception terminals), so that the scramble control system 6 outputs the individual information 15 including the encrypted work key to a multiplexer 2. This individual information 15 is transmitted when the reception terminal signs or renews a reception contract.

Alternatively, the related information transmitting device 4 outputs a scramble key 13 to a scrambler 3 as well as encrypts this scramble key by means of the work key, so that the related information transmitting device 4 outputs the common information 16 including the encrypted work key to the multiplexer 2. The multiplexer 2 time-division multiplexes an audio-video signal and a control signal composed of the individual information 15 and the common information 16. The scrambler 3 scrambles the audio-video signal in the multiplexed signal by the use of the scramble key 13, so that this scrambled image sound signal and the control signal (the individual information and the common information) are transmitted through the transmission path 33.

A set-top box (STB) 20 of the reception terminal 31 divides the scrambled image sound signal and the control signal from the reception signal of a channel which is selected in accordance with the operation of the user and outputs the control signal to a security module 21. The security module 21 decodes the encrypted work key by the use of the individual key to store it when the individual information is transmitted. Additionally, when the common information is transmitted, the encrypted scramble key is decoded by this work key and outputs it to the STB 20.

The viewing history information of a program which is viewed at the reception terminal 31 is recorded in a memory of the security module 21 and then, it is periodically transmitted from a modem of the STB 20 to an audio-visual information collection processing system 7 of the transmission side system 30 through a telephone line 32.

Alternatively, the reception terminal 31 is provided with an input device (not illustrated) composed of a keyboard or the like. If the user inputs the data of a commodity to be purchased by telephone shopping from the input device, this information is stored in a memory of the security module 21. Then, when the information other than the viewing history information is stored in the memory, this information is periodically transmitted to the audio-visual information collection processing system 7 of the transmission side system 30 through the telephone line 32.

In this way, conventionally, in order to monitor the expiration date of the viewing contract, a system is adopted in such a manner that a cryptographic key is broadcast only to a reception terminal with which a viewing contract has been made, so that descrambling of the audio-video transmission is disabled at the reception terminal at the expiration date of the viewing contract.
Alternatively, the method and apparatus are adopted such that a reception terminal and a transmission side are connected via a telephone line in order to upload the information from the reception terminal to the transmission side.

According to the prior art terminal, the life of the hardware and software are the same. For example, the Brown tube has been capable of being used as a television until its lifetime expires. However, information-based consumer electronic devices tend to have software with a shorter lifetime than that of the hardware. Therefore, after a passage of time, even if hardware is in good condition, the user cannot be provided with a new service since the software is outdated.

Therefore, a business mode is considered such that a set top box (STB) or the like with a short lifetime of software is offered to the user by a rental agreement or a lease agreement.

Under such a mode, it is necessary to monitor the expiration date of the rental agreement or lease agreement by a definite method having a compulsory power for collecting a fee. Alternatively, in the case where the software of the leased information-based consumer electronic devices becomes outdated, it is necessary that this software is replaced with new software and the hardware is modified in order to provide the updated service.

In the case of updating the software of the home electric appliance that has been installed at each home, it would cost a great deal if a service person were to visit each home, therefore, a method is conventionally considered such that software necessary for a reception terminal is downloaded by the use of the broadcast and the telephone line. However, even in the case where software is downloaded to the reception terminal by the broadcast, the software that is held by the reception terminal needs to be checked prior to the downloading. Further, it is necessary for the transmission side to obtain a report from the reception terminal, through the telephone line, to determine whether the installation after downloading proves successful.

As described above, a system has been conventionally well known such that a reception terminal and a transmission side are connected to each other through a telephone line. However, research has shown that very few reception terminals, which are used for viewing the pay broadcast, are actually connected to a telephone line. If the reception terminal is not connected to the transmission side through the telephone line, although the pay-per-view system does not allow payments to be made in arrears, a system charging the viewing fee in units of channels, referred to as a flat and a prepaid charging system by means of a prepaid card, is available. However, assuming that the reception terminal is not connected to the transmission side through the telephone line, as described above, a failure may occur in the case where software is downloaded to the reception terminal.

Alternatively, in the case of downloading the software, it is not enough that the reception terminal is connected to the transmission side through the telephone line. In other words, the telephone line is not connected at all times but it is connected by a dial-up service, so that, in the case of making a telephone call from the transmission side to the reception terminal, there is a possibility that the user at the reception terminal side, unknowing of the purpose of the call, will pick up the telephone receiver, so that the mechanical data exchange between the transmission terminal and the reception terminal may be obstructed. In order to avoid such an occurrence, it is required that both the reception terminal side and the transmission side automatically be able to transmit and receive signals.

However, a problem arises with respect to the telephone fee. If the user makes a telephone call from the reception terminal to the transmission side, the reception terminal side incurs the telephone fee. However, if transmission side places the telephone call to the reception side, the user may answer the telephone thereby interfering with the communication between the transmission side and the reception side.

### OBJECTS AND SUMMARY OF THE INVENTION

The present invention has been made taking the aforementioned problem into consideration, an object of the present invention is to provide an expiration date monitoring system capable of effectively monitoring an expiration date of a terminal, and, capable of securing a communication opportunity from the terminal side to the server side as a part of the expiration date monitoring and further, another object thereof is to provide a server and terminal device comprising this system.

Alternatively, to make a terminal obtain from a server not only the expiration date but also the information for controlling a terminal, which is represented by software to be downloaded to the terminal, is also an object of the present invention. Additionally, to transmit the log information recorded in the terminal, for example, the software downloaded and held by the terminal and the history for viewing the pay broadcast or the like, to the server, is also an object of the present invention.

Alternatively, in this specification, the term "an expiration date" is used as a term meaning not only a time limit with respect to time but also a threshold value with respect to the number of times, namely, the number of times of access or effectiveness unless otherwise specified.

Therefore, the present invention is constructed and arranged such that, in an expiration date monitoring system provided with a terminal and a server for monitoring an expiration date of this terminal, the server monitors the expiration date for each function of the terminal and the terminal periodically receives the renewal command of the expiration date from the server to store the renewed expiration date of each function, so that the terminal activates only a function of which expiration date does not expire among respective functions of the terminal.

Alternatively, the present invention is constructed and arranged in such a manner that the terminal periodically accesses the server through a communication circuit, obtains the renewal command of the expiration date from the server and stores the renewed expiration date, so that the terminal activates only the function of which expiration date has not expired.

Alternatively, the terminal is constructed and arranged to obtain the control information from the server at a predetermined time. On the other hand, the server is instructs the terminal to obtain the control information in the case where the terminal accesses the server. Additionally, this control information is obtained from the server by the terminal in the case where the terminal has been connected to the server through the telephone line. Particularly, this control information may be obtained during no communication condition for more than a predetermined time continues.

Alternatively, in the same way, the terminal transmits the log information recorded in the terminal to the server through the communication circuit at a predetermined time. On the other hand, the server requests the terminal to transmit the log information when the terminal accesses the server and then, the terminal transmits the log information in response to this request. The log information is transmitted in the case where the terminal has been connected to the server through the telephone line. Particularly, the log information may be transmitted when a "no communication condition" continues beyond a predetermined time.

Alternatively, a terminal is provided with: an expiration date renewal control means for controlling a periodical renewal of the expiration date; an expiration date renewal communication means for receiving an instruction of the expiration date renewal control means, accessing the server through the communication circuit and obtaining a renewal command of the expiration date; an expiration date checking means for checking the expiration date of each function of the terminal; a function activation means for activating each function of the terminal after the expiration date has been checked; and a security module for storing an expiration date for each function of the terminal, which is renewed on the basis of a renewal command of the expiration date which is obtained from the server; wherein the expiration date checking means passes the function, which is designated by the function activation means, to the security module when the function activation means designates a function and requires to check the expiration date, and then it requires to determine the suitability of the expiration date of the security module and when this determination indicates that the expiration date thereof is available, it gives the checking result of the expiration date to the function activation means.

Additionally, a server is provided with a viewer information data base for recording the information of an expiration data for each function of each terminal; and an expiration date renewal command transmitting means for checking that the terminal satisfies a condition of the usage when the terminal issues a renewal command obtaining request of the expiration date through a communication circuit, and generates a renewal command of the expiration date to transmit it.

Therefore, by setting the expiration date for each function of the terminal, it is possible to make the user reconfirm the expiration date in the processing that the function, of which expiration date has expired, sequentially becomes inoperative, so that it is possible to motivate the user to renew the expiration date. Alternatively, it is possible to secure a communication opportunity for access from the terminal side to the server side as a part of the expiration date management, so that it becomes possible for the server to collect the data from the terminal and to transfer the necessary software to the terminal.

Additionally, if the function is merely made inoperative when the expiration date thereof expires, an error such that the function is inoperative is communicated to the user when the user attempts to use the inoperative function, so that the user is forced into selecting another function. According to the present invention, in order to solve this problem, it can be referred as a parameter whether or not a content or an application is within the expiration date period and the inoperative function or the inoperative content is not displayed on a menu screen, so that the user is not able to use the function or content.

### Brief Description of the Drawings

FIG. 1 is a block diagram illustrating the expiration date monitoring system according to an embodiment of the present invention;
FIG. 2 is a diagram illustrating a specific example of a function activation device according to the embodiment;
FIG. 3 is a diagram illustrating information related to an expiration date according to the embodiment;
FIG. 4 is a diagram illustrating the operation procedure of an expiration date monitoring system according to the embodiment;
FIG. 5 is a diagram illustrating a conventional viewing history information collecting system;
FIG. 6 is a diagram illustrating a concept of another embodiment of the present invention;
FIG. 7 is a diagram illustrating a functional block of a server according to another embodiment of the present invention;
FIG. 8 is a diagram illustrating an expiration date holding unit of a server according to another embodiment of the present invention;
FIG. 9 is a diagram illustrating a functional block of a terminal according to another embodiment of the present invention;
FIG. 10 is a diagram illustrating a flow of the processing according to another embodiment of the present invention;
FIG. 11 is a diagram illustrating a flow of the processing according to another embodiment of the present invention;
FIG. 12 is a diagram illustrating a function of a terminal according to another embodiment of the present invention;
FIG. 13 is a diagram illustrating a functional block of a server according to another embodiment of the present invention;
FIG. 14 is a diagram illustrating an expiration date holding unit of a server according to another embodiment of the present invention;
FIG. 15 is a diagram illustrating a functional block of a terminal according to another embodiment of the present invention;
FIG. 16 is a diagram illustrating a functional block of a unit for determining the effectiveness of an expiration date per function of a terminal according to another embodiment of the present invention;
FIG. 17 is a diagram illustrating a functional block of a function activation unit of a terminal according to another embodiment of the present invention;
FIG. 18 is a diagram illustrating a flow of the processing according to another embodiment of the present invention;
FIG. 19 is a diagram illustrating a flow of the processing according to another embodiment of the present invention;
FIG. 20 is a diagram illustrating a functional block of a server according to another embodiment of the present invention;
FIG. 21 is a diagram illustrating a functional block of a terminal according to another embodiment of the present invention;
FIG. 22 is a diagram illustrating a functional block of an access-permitting unit of a terminal according to another embodiment of the present invention;
FIG. 23 is a diagram illustrating a functional block of a unit for determining the effectiveness of an expiration date per stored content of a terminal according to another embodiment of the present invention;
FIG. 24 is a diagram illustrating a flow of the processing according to another embodiment of the present invention;
FIG. 25 is a diagram illustrating a flow of the processing according to another embodiment of the present invention;
FIG. 26 is a diagram illustrating a functional block of a server according to another embodiment of the present invention;
FIG. 27 is a diagram illustrating a functional block of a terminal according to another embodiment of the present invention;
FIG. 28 is a diagram illustrating a functional block of a server according to another embodiment of the present invention;
FIG. 29 is a diagram illustrating a functional block of a terminal according to another embodiment of the present invention;
FIG. 30 is a diagram illustrating a functional block of a terminal according to another embodiment of the present invention;
FIG. 31 is a diagram illustrating a functional block of a server according to another embodiment of the present invention;
FIG. 32 is a diagram illustrating an example of a determination result referred as a parameter whether or not a function is within an expiration date;
FIG. 33 is a diagram illustrating an display in the case where a function is within an expiration date and an indication in the case where a function is not within an expiration date;
FIG. 34 is a diagram illustrating an example of a determination result referred as a parameter whether or not a content is within an expiration date;
FIG. 35 is a diagram illustrating a menu indication in the case where a function is within an expiration date and a menu indication in the case where a function is not within an expiration date;
FIG. 36 is a diagram illustrating an example of a determination result referred as a parameter whether a content is within an expiration date;
FIG. 37 is a diagram illustrating a difference between the indication of the content in the case where the content is within an expiration date and the indication of the content in the case where the content is not within an expiration date;
FIG. 38 is a diagram illustrating an example of a determination referred as a parameter from a mail application whether a function is within an expiration date or not;
FIG. 39 is a diagram illustrating an example of a determining a result referred as a parameter from a mail application whether a function is within an expiration date or not so that a screen for selecting a destination, in which the mail is to be stored, is displayed; and
FIG. 40 is a diagram illustrating an example of monitoring an expiration date of an electric home appliance to be rented or leased.

### DETAILED DESCRIPTION OF THE PREFERRED EMBODIMENT

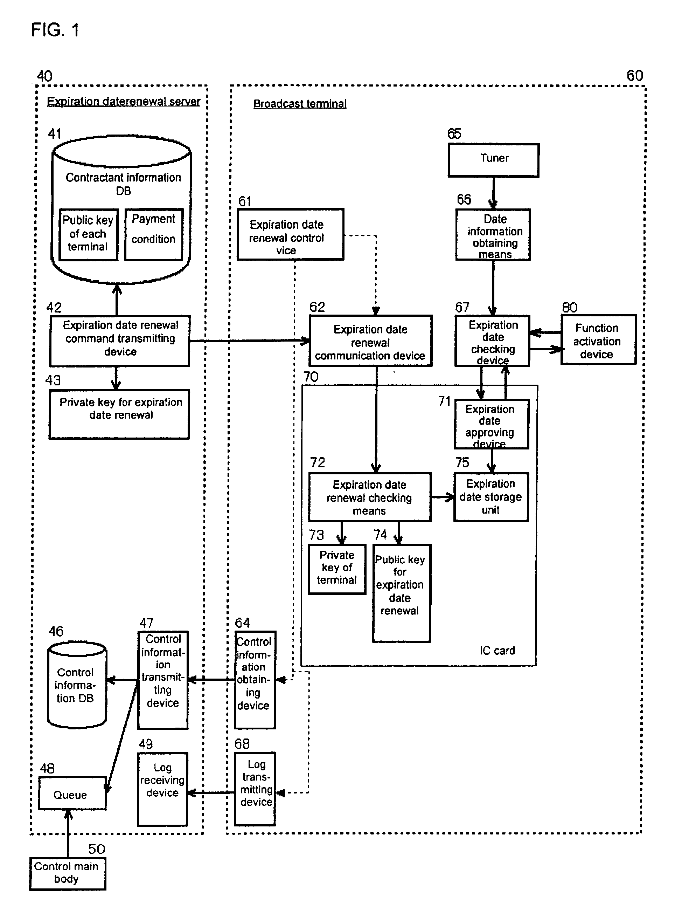

FIG. 1 illustrates an expiration date monitoring system according to an embodiment of the present invention. This system includes a broadcast reception terminal 60, which is provided by a rental agreement and a lease agreement, and an expiration date renewal server 40, which is connected to this broadcast reception terminal 60 through a telephone line and monitors the expiration date (i.e., the temporal expiration date on the basis of a contract) of the broadcast reception terminal 60.

The expiration date renewal server 40 is provided with a viewer information data base (DB) 41, in which the payment condition of the broadcast reception terminal 60 and the information of a public key of the respective broadcast terminals 60 are recorded, a private key for expiration date renewal 43 of the expiration date renewal server 40, an expiration date renewal command transmitting device 42 for renewing the expiration date of the broadcast reception terminal 60, the control information DB 46, in which the control information is recorded, a queue 48 for temporarily recording the control information to be inputted from a control main body 50, a control information transmitting device 47 for transmitting the control information to the broadcast reception terminal 60 and a log receiving device 49 for receiving the information of the viewing history (log), which is recorded in the broadcast reception terminal 60.

On the other hand, the broadcast reception terminal 60 is provided with an expiration date renewal control device 61 for controlling the renewal of the expiration date, an expiration date renewal communication device 62 for obtaining a renewal command of the expiration date from the expiration date renewal server 40 through the Internet, a control information obtaining device 64 for obtaining the control information from the expiration date renewal server 40, a log transmitting device 68 for transmitting the log information to the expiration date renewal server 40, a tuner 65 for receiving the digital broadcast, a date information obtaining means 66 for obtaining the date information which is included in the reception information, an expiration date checking device 67 for checking the expiration dates of respective functions, a function activation device 80 for activating the functions, of which expiration dates have been checked, and an IC card 70 as a security module. Further, the IC card 70 is provided with a private key of a terminal 73 for the broadcast reception terminal 60, a public key for the expiration date renewal 74 of the expiration date renewal server 40, an expiration date renewal checking means 72 for decrypting the renewal command of the expiration date, which has been transmitted from the expiration date renewal server 40, an expiration date storage unit 75 for storing the information of the expiration date, which has been renewed in accordance with the decrypted renewal command and an expiration date approving means 71 for determining whether the expiration date expires or not by cross-checking the current date and the function information transmitted from the expiration date checking device 67 with the expiration date stored in the expiration date storage unit 75 and, if the expiration date does not expire, for approving this expiration date.

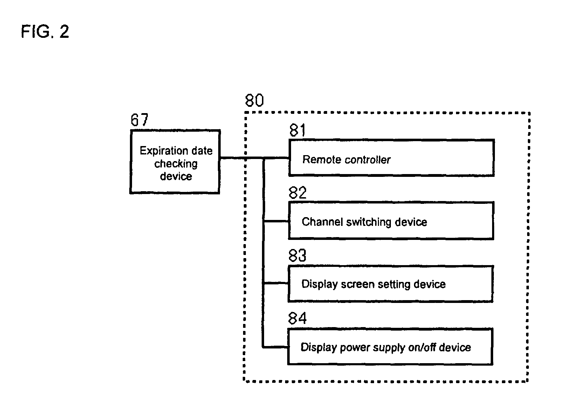

According to this system, the expiration dates are set for each function of the broadcast reception terminal 60. As shown in FIG. 2, the function activation device 80 of the broadcast reception terminal 60 includes a remote controller 81 for activating a function of a remote controller, a channel switching device 82 for activating a channel switching function, a display screen setting device 83 for setting a size of a displayed screen and a display power supply on/off device 84 for turning on/off a power supply of the display device or the like. Respective function activation devices 80 check the expiration dates of the functions monitored with the expiration date checking device 67. Then, if the expiration dates of the functions are confirmed, the function activation devices 80 activate the functions. In the case where the expiration date of the remote controller 81 expires, the remote controlling operation becomes unavailable. If the expiration dated of the channel switching device 82 expires, the channel switching becomes unavailable. If the expiration date of a display screen setting device 83 expires, the size of the displayed screen is contracted. Alternatively, if the expiration date of the display power supply on/off device 84 expires, the power supply of the display device is not turned on, so that the indication is not displayed on the screen.

By setting the expiration date of the function activation device 80 with staggering the date, if the user falls behind in payments, the remote controlling operation becomes unavailable. After that, it becomes impossible to perform the channel switching and then, the size of the screen is contracted and finally, no image is displayed on the screen. If the user makes the payment and performs the operation for renewing the expiration date (i.e., the activation of the expiration date renewal control device), respective functions will be recovered.

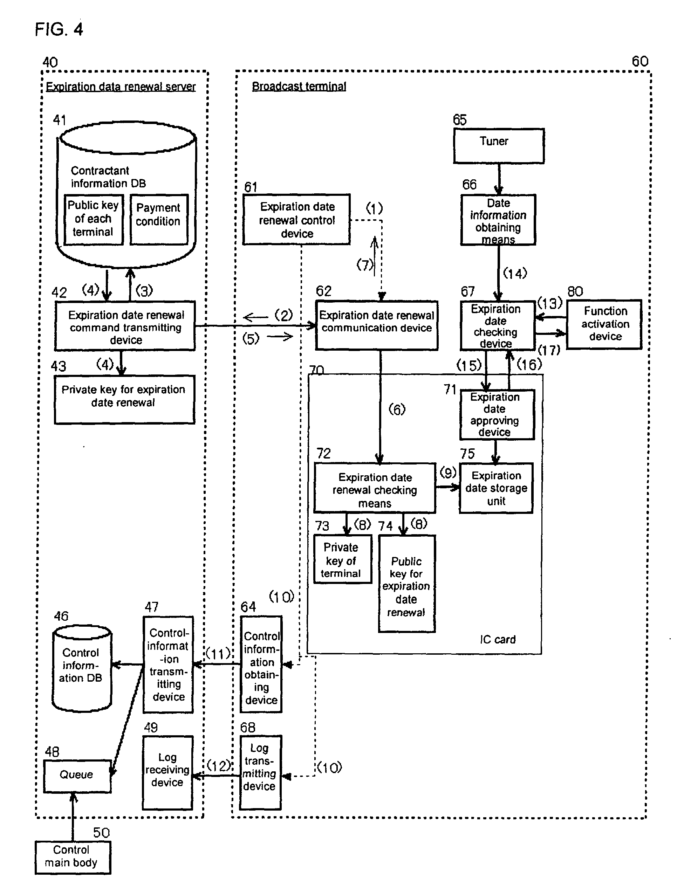

The operational procedure of this system will be explained with reference to FIG. 4.

(1) The expiration date renewal control device 61 of the broadcast reception terminal 60 instructs the expiration date renewal communication device 62 to obtain the renewal command of the expiration date each time when a regular period elapses. As this regular period, a period of the renewal of the contract is set. In the case where the renewal of the contract is set with various periods, for example, one year, one month and ten days or the like, the expiration date renewal control device 61 of the broadcast reception terminal 60 instructs the expiration date renewal communication device 62 to obtain the renewal command each time when the shortest period (i.e., ten days) elapses.

Alternatively, the period of the renewal of a contract may be used as a period when the terminal (i.e., the broadcast terminal) accesses the server (i.e., the expiration date renewal server) so as to obtain the control information and transmit the log information. Further, the server may instruct the terminal, for example, to access not "for each of ten days" but after ten days. Then, the server may instruct the terminal to access after ten days again when the terminal is accessed, so that, finally, the terminal accesses the server for each ten-day period. Alternatively, the server may instruct the terminal to obtain the next control information within a designated time. For example, the server may instruct the terminal to access the server to obtain the control information at a certain time in a certain month, on a certain day.

In the case where the server instructs the terminal in this way, the terminal will access the server on the date, which is designated by the server, namely, at a predetermined time. In this case, at the predetermined time, the instruction for time may be given to the terminal as described above and additionally, at the predetermined time, the terminal may access the server on the basis of a state of the terminal or the information received by the terminal or the like. Various conditions can be envisioned, such as, the case where the remaining capacity of the storage device of the terminal amounts to not more than 100 megabytes, the case where the weather report forecasts rain on that day, and the like.

(2) The expiration date renewal communication device 62 accesses the expiration date renewal server 40 through the Internet and sends a terminal identification of the expiration date renewal control device 61 to the expiration date renewal server 40, so that it demands the expiration date renewal command.

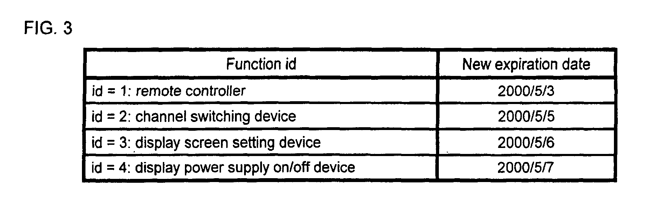

(3) The expiration date renewal command transmitting device 42 of the expiration date renewal server 40 checks the viewer information corresponding to the terminal id and a payment condition, which are recorded in the viewer information database 41. Then, in the case where the payment condition is satisfied, the expiration date renewal-command transmitting device 42 of the expiration date renewal server 40 generates the renewal command of the expiration date to extend the termination time of the contract by a certain period. As shown in FIG. 3, in this renewal command, a function id for identifying respective functions and a new expiration date set for each function is described.

(4) The expiration date renewal command transmitting device 42 obtains a public key corresponding to the terminal id from the viewer information database 41 to encrypt the renewal command, and further, the expiration date renewal command transmitting device 42 encrypts the encrypted renewal command by the use of the private key for expiration date renewal 43.

(5) The encrypted renewal command is transmitted to the broadcast reception terminal 60, which is connected to the Internet.

(6) The expiration date renewal communication device 62 of the broadcast reception terminal 60 transmits the received renewal command, which is encrypted, to the IC card 70.

(7) Then, the expiration date renewal communication device 62 of the broadcast reception terminal 60 notifies the expiration date renewal control device 61 of the completion of the acquisition of the renewal command.

(8) The expiration date renewal checking means 72 of the IC card 70 decodes the encrypted renewal command by the use of the public key for the expiration date renewal 74 and the private key of the terminal 73.

(9) Then, the expiration date renewal checking means 72 of the IC card 70 outputs the obtained renewal command to the expiration date storage unit 75. The expiration date storage unit 75 renews the information of the expiration date, which is stored therein by this renewal command.

(10) On the other hand, the expiration date renewal control device 61 which is notified of the completion of the acquisition of the renewal command, sequentially designates the control information obtaining device 64 and the log transmitting device 68 and then, it instructs the acquisition of the control information or the transmission of the log information by the use of the connected telephone line.

(11) If the control information obtaining device 64 demands the acquisition of the control information for the expiration date renewal server 40 by means of the connected telephone line, the control information transmitting device 47 of the expiration date renewal server 40 reads the control information which is recorded in the control information database 46 or the queue 48 to transmit it to the control information obtaining device 64.
Alternatively, the acquisition of the control information may be carried out when the telephone line is connected thereto and the no communication condition continues for not less than a certain time; the certain time means a predetermined time. For example, this specified time may be obtained by the terminal to be set as the control information from the server. Alternatively, "no communication condition" means a condition such that the communication is not established even when the telephone line is connected between the server and the terminal (namely, a condition that the meaningful signals are not exchanged, and so forth).

(12) Additionally, if the log transmitting device 68 transmits the log information of the broadcast reception terminal 60 by the use of the connected telephone line, the log receiving device 49 of the expiration date renewal server 40 stores it. Alternatively, the transmission of the log information may be carried out while the telephone line is connected thereto and a "no communication condition" continues for not less than a certain time.

On the other hand, the function activation device 80 checks the expiration date in the case of starting the operation.

(13) Respective function activation devices 80 sends the function id to the expiration date checking device 67 so that it demands the check of the expiration date for the expiration date checking device 67 upon starting the operation.

(14) The expiration date checking device 67 searches the current time, which the date information obtaining means 66 obtains from the BS digital broadcast.

(15) Then, the expiration date checking device 67 outputs this current time and the function id, which is input from the function activation device 80, to the IC card 70.

(16) The expiration date approving means 71 of the IC card 70 compares the expiration date which is stored in the expiration date storage unit 75 with the current time and the function id, which are sent from the expiration date checking device 67. Then, in the case where the current time does not reach the termination time of the expiration date for that function, the expiration date approving means 71 determines that function as "available" and in the case where the current time is over the termination time of the expiration date for that function, the expiration date approving means 71 determines that function as "unavailable". Then, the expiration date approving means 71 transmits the determination result of the function, namely, "available" or "unavailable" to the expiration date checking device 67.

(17) When the determination of the expiration date approving means 71 is "available", the expiration date checking device 67 provides the checking result of the expiration date to the function activation device 80.

Respective function activation device 80 check the expiration dates of the functions monitored by the expiration date checking device 67, respectively and if the expiration dates of the controlled functions are confirmed, the function activation device 80 activate these functions.

The queue 48 of the expiration date renewal server 40 plays a role in such a manner that it temporarily stores the control information to be input from the control main body 50 such as a business enterprise to rent the broadcast reception terminal 60, a business enterprise to take charge of the maintenance or a broadcast center or the like, so that the queue 48 absorbs the asynchronicity with the acquisition demand from the control information obtaining device 64. Any of them may issue the control information to be recorded in the queue 48.

The control information to be recorded in the control information database 46 or the queue 48 comprises, for example, the information with respect to a program for entirely changing a telephone number in accordance with the change of a dialing code and a screen saver or the like. Alternatively, the control information to be recorded in the control information database 46 or the queue 48 comprises the control information for renewing the guide screen of the broadcast reception terminal 60 and the control information for reserving the reception of the broadcast reception terminal 60 so as to select the designated channel at its broadcasting time in the case of downloading software through the broadcasting or the like. Additionally, as with the control information, the information, which is recorded from a different server from the expiration date renewal server 40, may be transmitted.

Alternatively, the log transmitting device 68 of the broadcast reception terminal 60 transmits the data of the program which has been viewed at the broadcast reception terminal 60 and the recorded data, such as a response to a questionnaire which the user has filled out, or the like, to the expiration date renewal server 40.

Alternatively, the date information obtaining means 66 is capable of obtaining time per second by obtaining a TDT (Time Definition Table), which is standardized by ARIB (Association of Radio Industries and Businesses)), which is included in the BS digital broadcast or the like.

In this way, according to this expiration date monitoring system, if the expiration date of the terminal function expires (i.e., reaches the set termination time), the effectiveness of the terminal function has been lost. This expiration date is renewed if it is confirmed that the condition for using the terminal function (for example, the user has paid a monthly utilization fee or the user has responded to a duty questionnaire or the like) is satisfied when the terminal is connected to the expiration date renewal server through a communication circuit to demand the renewal command of the expiration date, so that an expiration date setting a new termination time after a certain period is stored in the terminal.

Therefore, the terminal has an opportunity to communicate with the expiration date renewal server every regular period. As a result, it becomes possible for the expiration date renewal server to collect the terminal information necessary for the maintenance to download software for a new service and to renew the portal screen at the terminal side including the guide information to the user in this opportunity.

Alternatively, it is possible to define that a communication fee for this communication is charged to the user in a contract article for renting a terminal and to obtain an explicit understanding from the user. This communication connection every regular period is inevitable for renewing the expiration date of the terminal, so that the understanding of the user can be easily obtained with respect to the charge of this communication fee.

Alternatively, according to this system, since the expiration date is set for each function of a terminal, at a point of time when a part of the function, of which the expiration date elapses, becomes inoperative, the user who perceives it pays the utilization fee and renews the expiration date, thereby to recover the function of the terminal. In this case, by setting the expiration date so that a function of a portion taking part in the renewal of the expiration date of the terminal (i.e., the expiration date renewal control device 61, the expiration date renewal communication device 62, the tuner 65, the date information obtaining means 66, the expiration date checking device 67 and the IC card 70 or the like) can survive partially, the renewal processing of the expiration date becomes possible.

Alternatively, in this case, the broadcasting reception terminal (a terminal) is mainly explained. However, the present invention may also be applied to the management of other home electric appliances to be rented or leased. In other words, a terminal according to the present invention includes not only a terminal to receive the broadcast, or the like, but also the entirety of general electric appliances. Accordingly, the term electric appliance includes various kinds of electric appliances, such as a refrigerator for household use, a light fixture, a microwave oven, an electronic oven, a juicer, a mixer, a toaster, audio equipment, a laundry machine, a drier, a washer-dryer, a trouser press, a telephone set, a clock, a timer, an automatic water heater for a bath, an air conditioner, an electric fan, a heater-table, an electronic blanket, a lavatory seat with a cleaning function, a cellular phone, a remote controller, a set top box, a home server, a home information disk and a radio or the like.

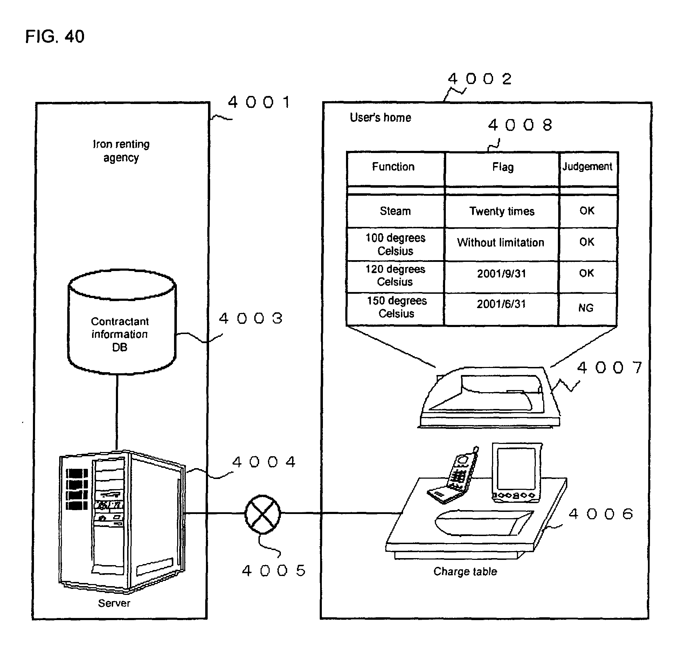

For example, as shown in FIG. 40, it is assumed that there is an Iron renting agency 4001 and a user's home 4002, to which the iron is rented, the Iron renting agency 4001 holds a user DB 4003 for monitoring the user information of the iron for each user, the user information DB 4003 can be referred from a server 4004 and the user information DB 4003 is connected to a charge table 4006, which is located at the user's home 4002, from the server 4004 through a communication circuit 4005. As shown in a table 4008, an iron 4007 located at the user's home 4002 holds the expiration dates for each function and the number of times of the usage, so that it is determined whether the function can be offered each time when the iron is used. For example, a value in a line of "judgement" in the table 4008 indicates whether a function is capable of being offered in the case where the iron is used in July 10, 2001. In this case, the functions of "steam", "100 degrees Celsius" and "120 degrees Celsius" can be offered. However, the expiration date stored in a line of a flag is a past date, so that the determination becomes NG and the function of "150 degrees Celsius" cannot be offered. In the case where there is a function not capable of being offered in this way, the user sets the iron 4007 at the charge table 4006. Then, the charge table establishes the communication with the server 4004, the server 4004 checks a content of the user information DB 4003, the server 4004 returns this response to the charge table 4006 and the charge table 4006 sets a content of the contract to the iron 4007. If the user pays the utilization fee to renew the expiration date of the function of "150 degrees Celsius", the table 4008 is renewed, so that the user can use the function of "150 degrees Celsius".

By monitoring the functions of the iron and making the user pay the fee for the functions in this way, the Iron renting agency is capable of recovering the purchase price of the iron from the fee for the function to receive from the user. As a result, it becomes possible to set an initial cost, to be collected upon renting the iron to the user, of the iron lower than the purchase price of the iron, so that the user is capable of obtaining the iron at a lower initial cost and further, the Iron renting agency is capable of acquiring many users by setting such a lower initial cost.

Alternatively, the usage of the charge table 4006 is not limited to the renewal of the function of the iron 4007 but, as shown in FIG. 40, and it is also possible to use one charge table for renewing the function such as a cellular phone and a personal computer or the like. Although the management of the temporal expiration date is explained here, in the case of renting a game machine, it is also possible to monitor the number of the played games as the expiration date by the same system. In this case, the number of times of effectiveness to be set in a counter for counting the number of the played games is renewed by the server for renewing the expiration date.

### (Another Embodiment)

In the next place, another embodiment of the present invention will be described.

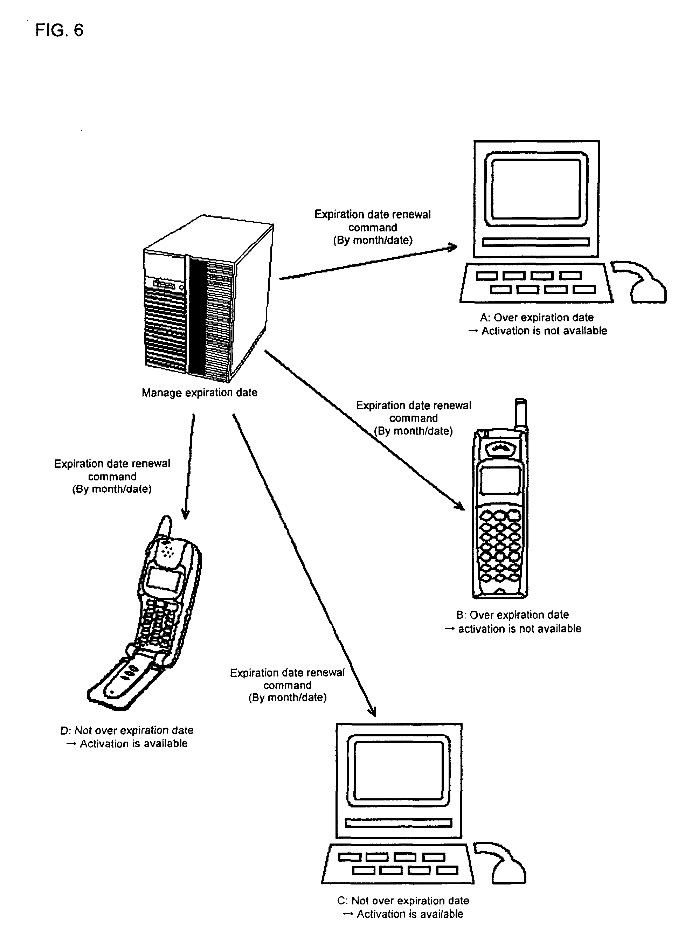

FIG. 6 illustrates a concept of an expiration date monitoring system composed of a terminal and a server capable of monitoring an expiration date for availability of the terminal and capable of controlling the expiration date. As shown in this drawing, one system includes a server to monitor the expiration date and a plurality of terminals, of which the expiration date is monitored by this server. In this case, the term "expiration date" means a temporal period in which a terminal cannot carry out an original function thereof. Accordingly, not only a closing time of the expiration date but also a start time thereof may be also monitored. For example, in FIG. 6, it is assumed that four terminals A to D are monitored by a server for monitoring the expiration date. Then, it is assumed that the terminals A and B, of which expiration dates have passed the dates given by the server as the expiration dates, cannot activate, so that the terminals A and B cannot carry out the functions as a terminal. On the other hand, since the expiration dates of the terminals C and D have not yet passed the dates given by the server as the expiration dates, it is possible to activate them. Alternatively, it is also supposed that a terminal or the like to be used in a startup state at all times may be controlled so that the activation thereof is stopped other than that it cannot be activated.

Then, this invention will be described more in detail below. This expiration date monitoring system comprises a terminal and a server for monitoring an expiration date of this terminal; wherein the server monitors the expiration date of the terminal and the terminal receives a renewal command of the expiration date from the server to store the renewed expiration date, so that the terminal decides the suitability of the activation on the basis of the expiration date and only in the case where the renewed expiration date is not over the expiration date of the terminal, the server activates the terminal.

Then, the constitution of this expiration date monitoring system will be explained.

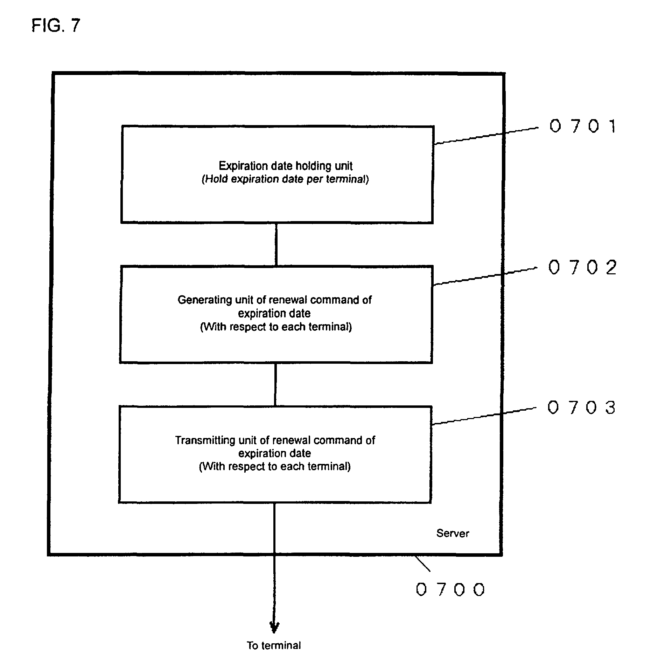

FIG. 7 illustrates an example of a server embodying this expiration date monitoring system. This server 0700 monitors the expiration date of the terminal and transmits a renewal command of this expiration date to the terminal, so that it makes the terminal store the renewed expiration date. Therefore, the server 0700 includes an expiration date holding unit 0701, a generating unit of a renewal command of an expiration date 0702 and a transmitting unit of a renewal command of an expiration date 0703.

The expiration date holding unit 0701 holds the expiration dates for each terminal, of which the expiration date is monitored by this server. The expiration date holding unit 0701 comprises a recording device and it uses a magnetic recording medium, a DVD, a CD and a RAM (random access memory) or the like as a recording medium. For example, in the case where a terminal is a receiving device of the pay TV broadcast, the expiration date thereof is decided by paying the viewing charge. Alternatively, in the case where the terminal comprises a cellular phone, the maximum distance for which a long distance call can be established may be decided depending on a charge for a call which has been paid in advance.

For example, in the case of extending an expiration date of a corresponding terminal in accordance with the new payment of the fee, the generating unit of a renewal command of an expiration date 0702 serves to extend the expiration date of this terminal and to generate a signal for carrying out the function of the terminal during this period. "The generation of the renewal command" of the expiration date means that a new expiration date is obtained from the expiration date holding unit 0701 in association with an identification code such as an address of a receiving device to be renewed and then, a command is constituted such that a specific memory address of an expiration date storage unit of the receiving device to be renewed is rewritten into this obtained new expiration date. Accordingly, a renewal command of the expiration date to be given to each terminal is carried out after identifying each terminal.

Additionally, the renewal command may include the information other than the expiration date. For example, the renewal command may include the information that a condition for rewriting the storage unit of an expiration date of terminal in order to renew the expiration date is defined, the information of a network path for transmitting the renewal command to the terminal and other management information or the like.

The transmitting unit of a renewal command of an expiration date 0703 serves to transmit the renewal command of the expiration date to each terminal in order to offer it. Any method can be used as a means for transmitting the renewal command, however, generally, a wireless or wired communication may be used. The renewal command of the expiration date may be transmitted through a public network or by the use of a dedicated circuit. Alternatively, the renewal command of the expiration date may be transmitted through a recording medium. As the recording medium, various mediums including a magnetic recording medium such as an IC card, a floppy disk or the like, a recording medium such as a CD and a DVD or the like and a magnetic card or the like may be used.

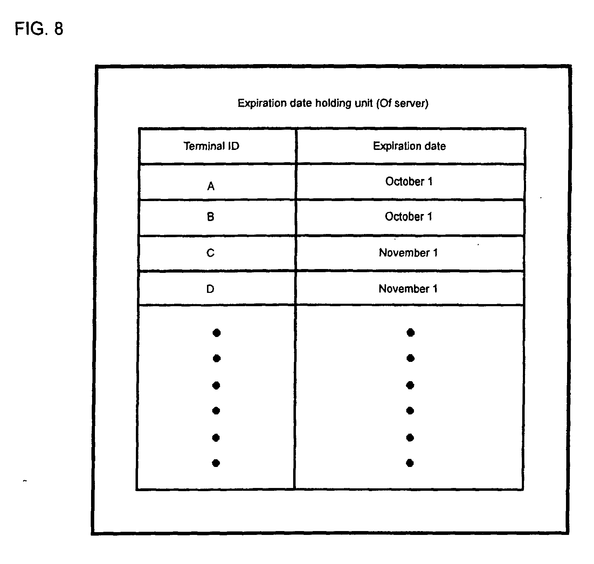

FIG. 8 illustrates a concept of the expiration date data, which is held in an expiration date holding unit of a server. In association with an ID of a terminal and this ID, the expiration date is defined. By designating the ID of the terminal, the expiration date data of this terminal is capable of being removed. This is because this data can be used when the need arises such that each terminal should generate the renewal command of the expiration date.

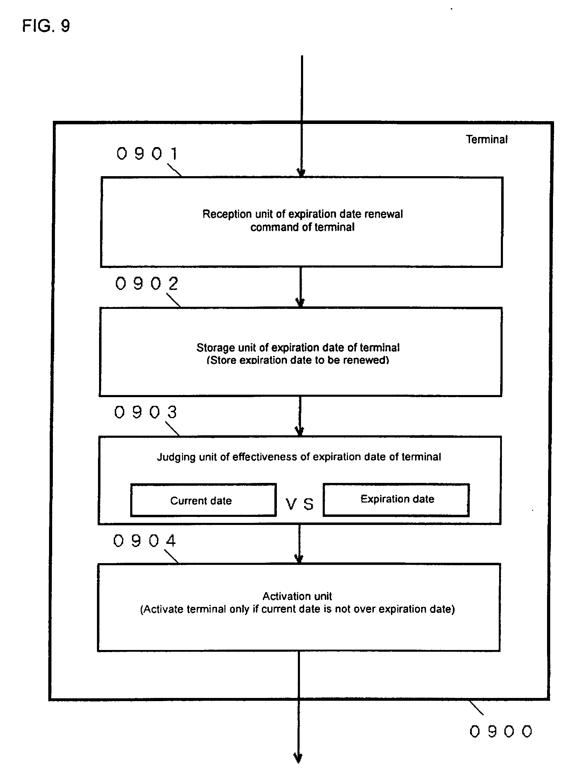

FIG. 9 illustrates an example of a functional block diagram of a terminal constituting this expiration date monitoring system. A terminal 0900 receives the renewal command of the expiration date from the server and stores the renewed expiration date. Then, only in the case where the renewed expiration date is not over the expiration date of the terminal, the terminal is activated. Therefore, as shown in this drawing, the terminal 0900 includes a reception unit of an expiration date renewal command of a terminal 0901, a storage unit of an expiration date of a terminal 0902, a unit for determining the effectiveness of an expiration date of a terminal 0903 and an activation unit of a terminal 0904.

The reception unit of an expiration date renewal command of a terminal 0901 serves to receive the renewal command of the expiration date from the server. As described above, this reception unit of an expiration date renewal command of a terminal 0901 may receive the renewal command of the expiration date from the server through a wireless communication or a wired communication. Further, it may receive the renewal command of the expiration date from the server through some recording medium. In the case of receiving the command through the recording medium, a means for reading a signal, which is recorded in the recording medium, may be also included.

The storage unit of an expiration date of terminal 0902 serves to store the information as to how long the terminal can carry out the function of the terminal and further, it plays a role to pass the stored information when a unit for determining effectiveness of an expiration date of a terminal, to be described later, determining whether the terminal should be activated or not.

The unit for determining effectiveness of an expiration date of a terminal 0903 obtains the information with respect to the expiration date from the storage unit of an expiration date of a terminal 0902 and it further obtains the information with respect to a time upon trying to activate the terminal, namely, a current date. Then, comparing the expiration date with the current date, the unit for determining effectiveness of an expiration date of a terminal 0903 determines whether the current date is included in the expiration date or the current date is not included in the expiration date. As a result of the comparison, in the case where the current date is included within the expiration date period, the unit for determining effectiveness of an expiration date of a terminal 0903 generates a signal for allowing the activation of this terminal, and in the case where the current date is not included within the expiration date period, the unit for determining effectiveness of an expiration date of a terminal 0903 generates a signal not to allow the activation of this terminal. It is a matter of course that, a processing is available such that, in the case where the activation is not allowed, a signal is not generated and in the case of allowing the activation, the signal is generated. Further, a reversed processing may be available.

For example, in the case where the current date is November 24, 2002 and the expiration date is November 25, 2002, it is possible to activate this terminal since the current date is within the expiration date period. If the current date is November 26, 2002, it is not possible to activate this terminal since the current date is not within the expiration date period.

The expiration date may be defined by year, month and day or may be defined even by hour, minute and second as described herein. Alternatively, it is considered that this unit for determining effectiveness of an expiration date of a terminal 0903 obtains the current date from a clock, which is built in the terminal in order to obtain the current date. However, the unit for determining effectiveness of an expiration date of a terminal 0903 may obtain the current date from the outside through the communication circuit or the like. For example, a portable communication terminal and a terminal that is connected to the communication circuit at all times can use the standard date information to be offered by a server or the like capable of being connected therewith through this communication circuit. Alternatively, in the case where the terminal has a broadcast receiving function, it is possible to use the standard date information that is included in a broadcast signal. For example, the standard date information may be the date information that is included in the digital broadcast or the like. In this case, "the current date" may be a date upon trying to activate the terminal or may be a date when the terminal tries to obtain the current data in accordance with some rules.

Sometimes, the activation unit of a terminal 0904 activates the terminal in accordance with the determination result in the unit for determining effectiveness of an expiration date of a terminal 0903 and other times the activation unit of a terminal 0904 does not activate the terminal. The activation unit of a terminal 0904 has a function to transmit a signal for the activation in order to activate the terminal or in order not to activate the terminal. Further, it is not always necessary for the activation unit itself to carry out the activation operation.

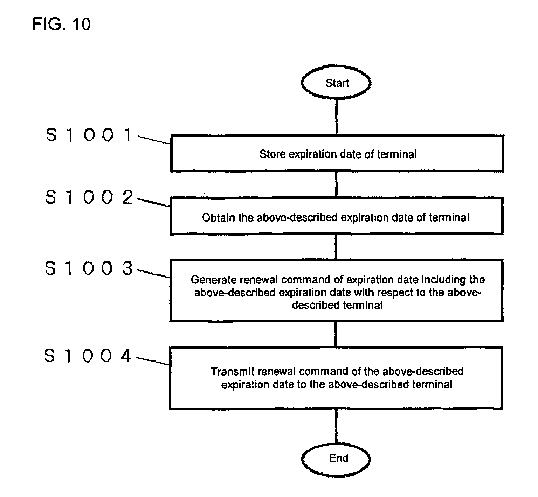

FIG. 10 illustrates a flow of the processing of a server of this expiration date monitoring system. As shown in this drawings, at first, the server carries out the processing in such a manner that it stores an expiration date of a terminal (step S1001), then, obtains the expiration date of the terminal (step S1002), further, it generates a renewal command of the expiration date including the expiration date with respect to the terminal (step S1003) and finally, transmits the renewal command of the expiration date to the terminal (step S1004).

The server may not be the only one to carry out this processing, it may be carried out by other devices in addition to the server or a portion of the terminal occasionally carries out the processing together with the server. Alternatively, by making the server or the like read a recording medium, in which a program for carrying out these processes is recorded, it is possible to carry out these processes. Further, this program is distributed to the server through the communication circuit so that the server carries out these processes. Hereinafter, the flow of the processing at the server and the terminal is not explained. However, it is a matter of course that the same flow is carried out basically.

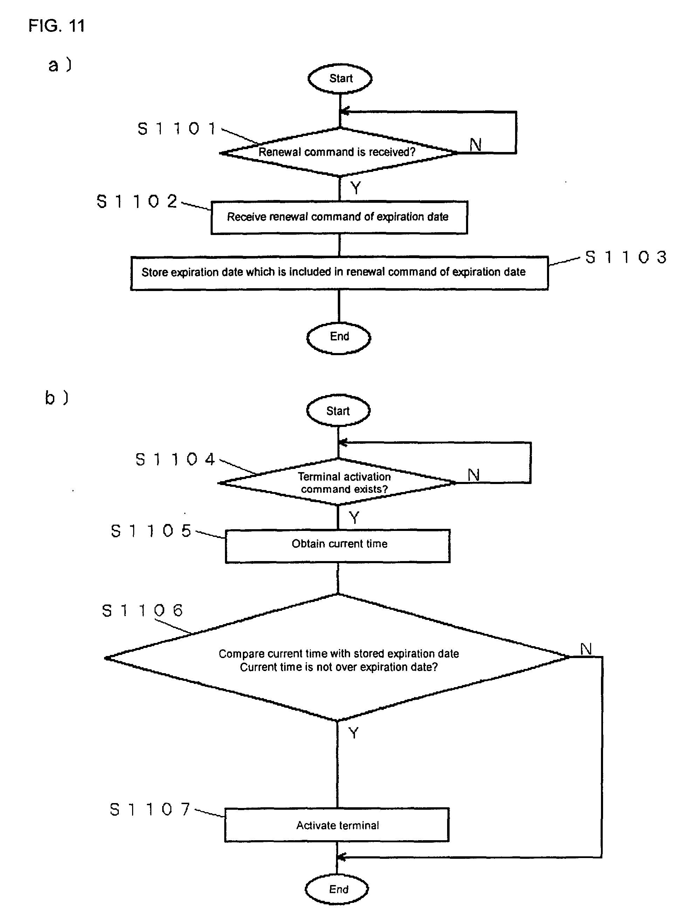

FIG. 11 illustrates a flow of the processing of a terminal of this expiration date monitoring system. At first, the expiration date monitoring system determines whether a renewal command is received or not (step S1101). Then, if it is not received, the expiration date monitoring system stands ready to receive it. In the case of determining that the renewal command is received, the expiration date monitoring system receives the renewal command of this expiration date (step S1102). Then, the expiration date monitoring system stores the expiration date, which is included in the renewal command of this expiration date (step S1103). After that, the expiration date monitoring system determines whether the activation command of the terminal exists or not (step S1104), obtains the current time in the case where the activation command of the terminal exists (step S1105) and compares the current date with the stored expiration date, so that it determines whether the current date is over the expiration date or not, in other words, it determines whether the current date is within the expiration date period or not (step S1106). In the case where it is determines that the current date is within the expiration date period, the expiration date monitoring system activates the terminal (step S1107) and in the case where it is monitored that the current date is not within the expiration date period, the expiration date monitoring system does not activate the terminal.

In the next place, a case will be explained where the server monitors the expiration date for each function of the terminal.

This expiration date monitoring system comprises a terminal and a server for monitoring an expiration date of this terminal, and the server monitors the expiration date for each function of the terminal and the terminal periodically receives a renewal command of the expiration date from the server to store the renewed expiration date of each function, so that the terminal activates only a function of which expiration date does not expire, among respective functions of the terminal. According to the above-described expiration date monitoring system, it is monitored by the expiration date whether the activation of the terminal is enabled or not. However, according to the expiration date monitoring system of this embodiment, a plurality of functions owned by the terminal is monitored by the expiration date, respectively. In this case, "a function of a terminal" includes various operation functions owned by the terminal and a function to be carried out by the terminal or the like.

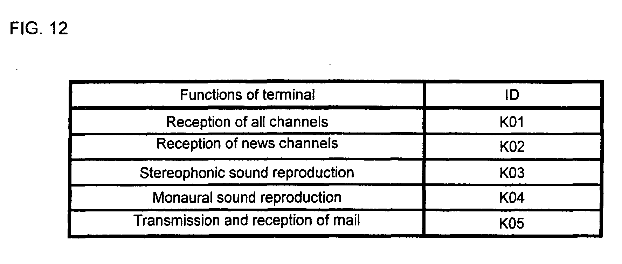

FIG. 12 illustrates an example of a function of a terminal according to this embodiment. For example, in the case where the terminal is capable of receiving a program or the like from a plurality of channels, a function of a terminal includes a function to receive all channels, or a function to receive a news channel as a portion of the channels or the like. Further, a function of a terminal includes a function for stereophonic reproduction of a sound, a function for monaural reproduction and a function for transmission and reception of electric mail or the like. It is a matter of course that a function of a terminal is not limited to these functions but various functions are considered. In the case where the terminal is provided with a telephone function, a function to make a phone call a specific telephone number is supposed. In the case where the terminal is a device capable of being operated by remote control, various functions such as a remote control function is supposed.

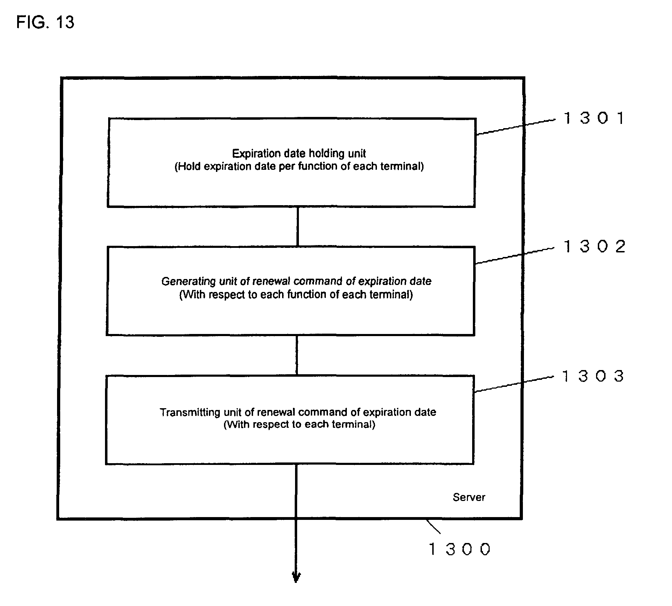

FIG. 13 illustrates an example of a functional block diagram of a server according to this embodiment. A constitutional block shown in this drawing is basically the same as the functional block of the above-described server, which monitors an expiration date of the activation of the terminal. However, in order to monitor the expiration date for each function of the terminal, an expiration date holding unit 1301 holds the expiration date for each function of each terminal and a generating unit of a renewal command of an expiration date 1302 also generates a renewal command in order to control each function of each terminal. Alternatively, a transmitting unit of a renewal command of an expiration date 1303 transmits this renewal command to a terminal having a function to be monitored by this expiration date. This is because the input and the output of the information are carried out for each terminal in most cases. However, in the case where the input and the output of the information are carried out for each function of a terminal, the transmitting unit of a renewal command of an expiration date may adopt a constitution to be transmitted to an information input and output unit which monitors each function of each terminal.

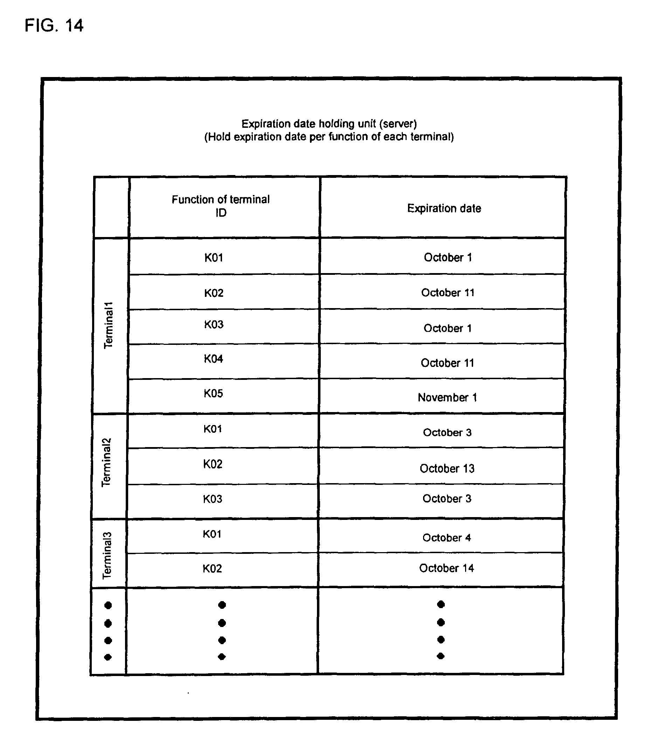

FIG. 14 is a conceptual diagram illustrating how the expiration date is monitored for each function of each terminal at this expiration date holding unit of the server, which monitors the expiration date. As shown in this drawing, the expiration date of each function is held in association with a function ID of a terminal that identifies the function. For example, as shown in FIG. 12, a reception function of all channels is held in association with "K01" and a reception function of a news channel is held in association with "K02".

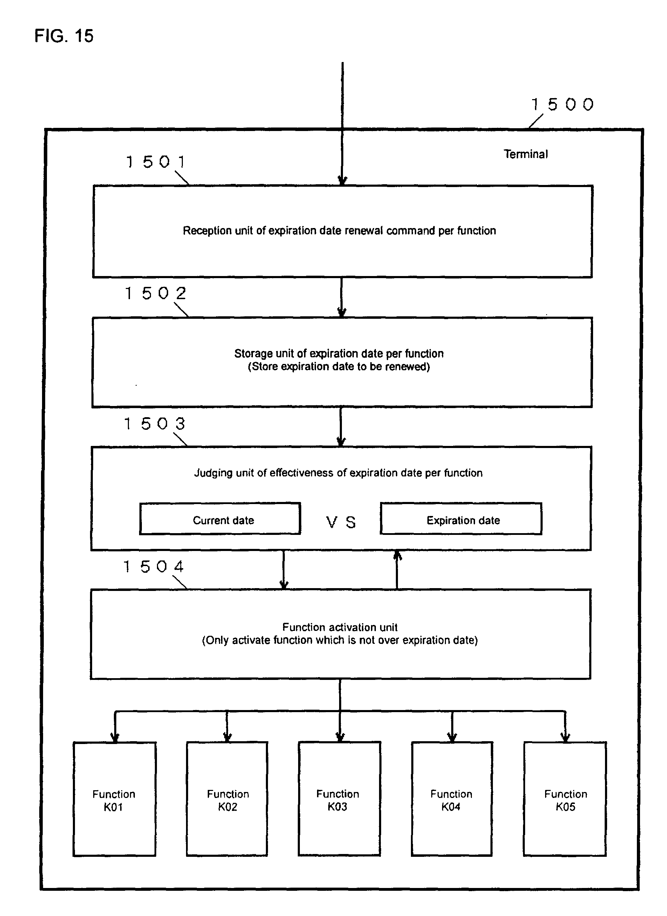

FIG. 15 is an example of a functional block diagram of a terminal 1500 of this expiration date monitoring system. Basically, the functional block of the terminal 1500 of this expiration date monitoring system is not different from that of the above-described embodiment for monitoring the activation of the terminal. However, the functional block of the terminal 1500 of this expiration date monitoring system is different from that of the above-described embodiment for monitoring the activation of the terminal in that the reception unit of an expiration date renewal command, the storage unit of an expiration date, the unit for determining effectiveness of an expiration date and the activation unit comprise a reception unit of an expiration date renewal command per function 1501, a storage unit of expiration date per function 1502, a unit for determining effectiveness of an expiration date per function 1503 and a function activation unit 1504 in order to monitor the expiration date for each function. Alternatively, the function activation unit is capable of activating each function (K01 to K05) so that it can activate only a function of which expiration date does not expire, namely, a function within the expiration date period.

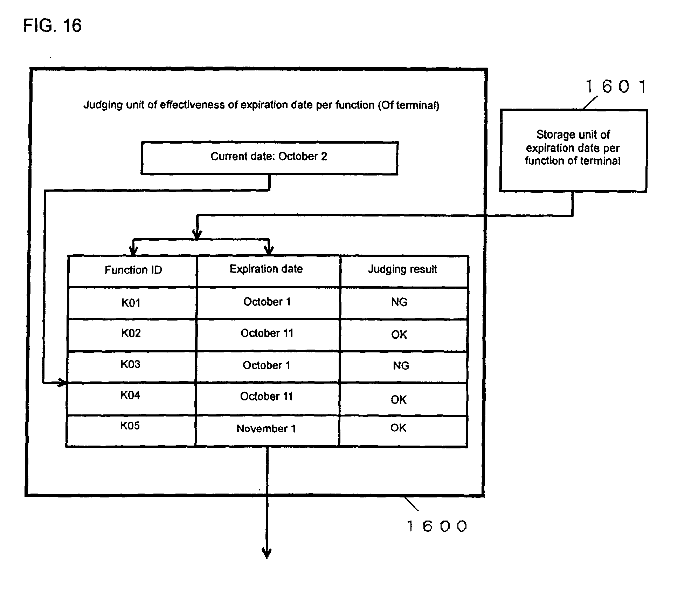

FIG. 16 illustrates a concept of a unit for determining effectiveness of an expiration date per function. In order to determine the effectiveness of the expiration date, the unit for determining effectiveness of an expiration date per function obtains the current date as well as the expiration date information which is associated with the function ID for identifying the function from the storage unit of expiration date per function of a terminal to compare the both of them. For example, in the case where the current date is October 2, the unit for determining effectiveness of an expiration date per function generates a determination such that K01 and K03, of which expiration dates are October 1, are not capable of activating the function and K02, K04 and K05 of which expiration dates are October 11 are capable of activating the function and passes the result to the function activation unit.

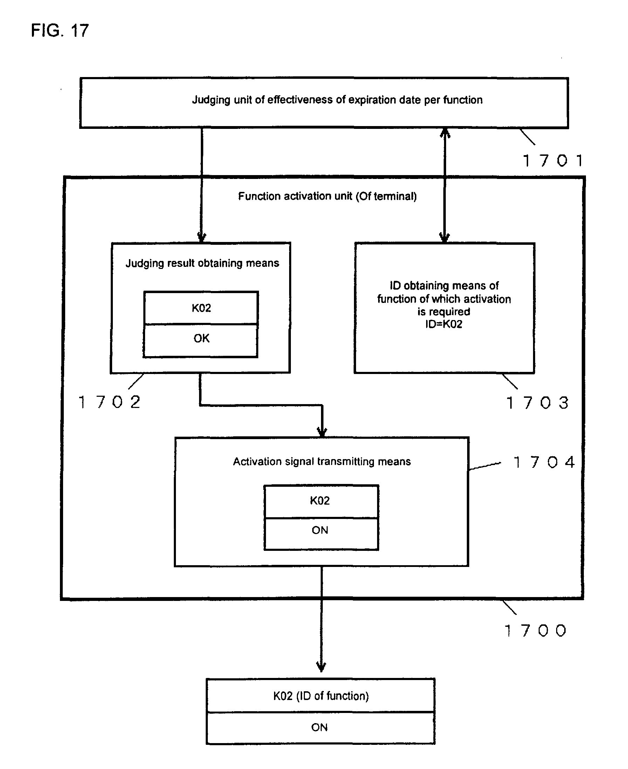

FIG. 17 is a conceptual diagram illustrating a condition of obtaining a determination from a unit for determining effectiveness of an expiration date per function 1701 so as to activate the corresponding function. For example, a determination obtaining means 1702 of a function activation unit 1700, which has obtained K02 as an ID for identifying the function from a unit for determining effectiveness of an expiration date per function 1701 and the determination "OK" with respect to the suitability of the activation, namely, the determination such that the activation is possible, passes this determination to an activation signal transmitting means 1704. Then, the activation signal transmitting means 1704 carries out the processing of the function which is identified by its ID, for example, the processing such that the reception function of the news channel is turned ON. Alternatively, as shown in FIG. 17, the function activation unit 1700 may also be constructed and arranged such that it accepts the activation request and an ID of the function that is requested to be activated by means of an ID obtaining means of a function of which activation is required 1703 and then, passes the ID to the unit for determining the effectiveness of an expiration date per function 1701, so that the function activation unit 1700 starts the processing for a series of the activation of the function.

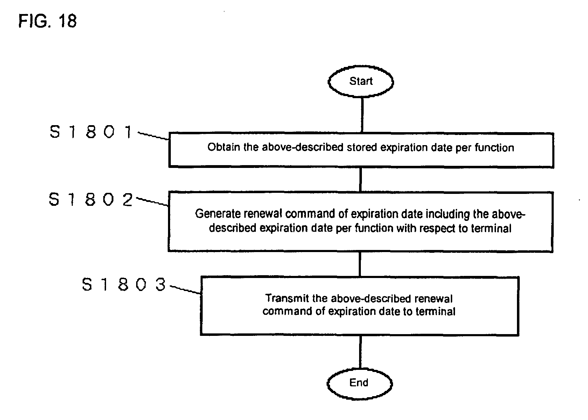

FIG. 18 shows a flow of a processing in a server of an expiration date monitoring system for separate functions. The server obtains an expiration date for each of the various functions, which is stored in advance (step S180), then, generates a renewal command of the expiration date including the expiration date for each of the various functions with respect to a terminal (step S1802) and finally, transmits the renewal command of the expiration date to the terminal (step S1803) to terminate the processing.

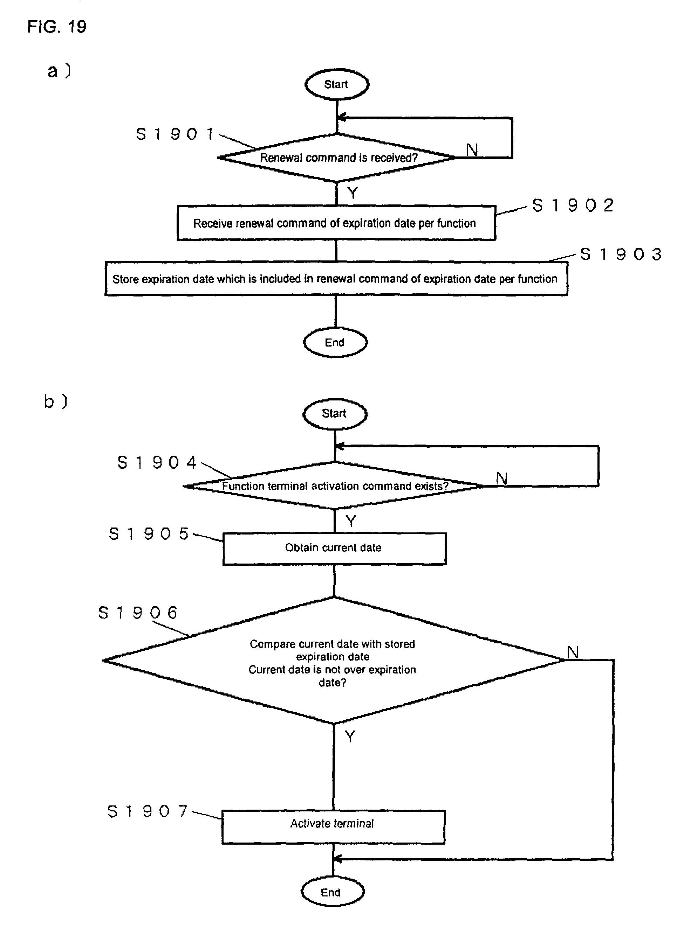

FIG. 19 shows an example of a flow of a processing in a terminal of an expiration date monitoring system for various functions. At first, the terminal determines whether the renewal command is received or not (step S1901). Then, in the case where the renewal command is not received, the terminal stands ready to receive it. In the case where it determines that the renewal command is received, the terminal receives the renewal command of the expiration date for the various functions (step S1902). Then, the terminal stores an expiration date that is included in the renewal command of the expiration date for the various functions (step S1903). After that, the terminal determines whether there is the activation command of the function of the terminal or not (step S1904) and obtains the current data in the case where there is the activation command of the function of the terminal (step S1905). Then, comparing the current date with the stored expiration date of this function, the terminal determines whether the current date is over the expiration date or not, in other words, the terminal determines whether the current date is within the expiration date period or not (step S1906). In the case where it is determined that the current date is within the expiration date period, the terminal activates the corresponding function of the terminal (step S1907). Otherwise, the terminal does not activate the corresponding function of the terminal to terminate the processing.

Alternatively, it is not necessary to monitor the expiration dates of all functions. In other words, it is enough that a part of functions among many functions may have the expiration date. In such a case, it is possible to activate the function, of which expiration date is not monitored, at all times. Adversely, the functions other than the functions, of which expiration dates are monitored, may be set to be inactivated at all times.

In the next place, an embodiment will be explained such that the access to a content capable of being viewed by the use of a terminal is monitored by the expiration date. According to this embodiment, the access to the content is adopted in place of respective functions of the above-described expiration date monitoring system for monitoring the expiration date per function. Accordingly, a basic construction and arrangement of the system is the same as that of the above-described expiration date monitoring system per function.

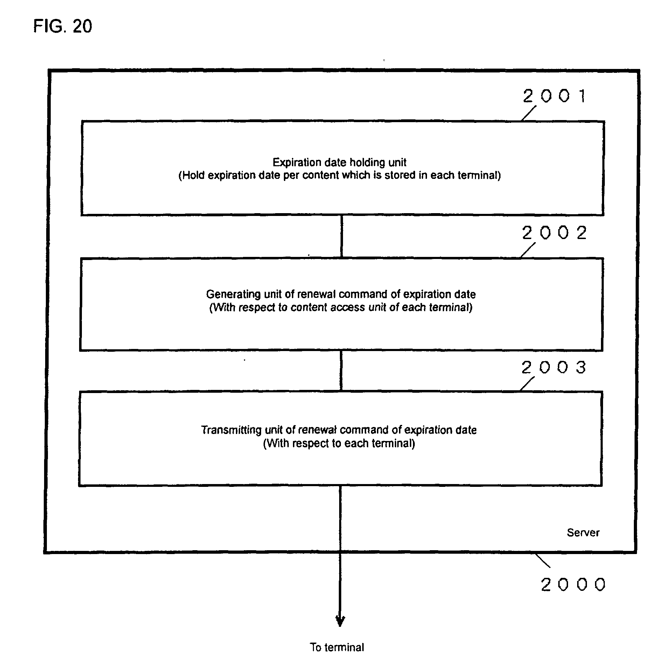

FIG. 20 shows an example of a functional block diagram of a server which is constructed and arranged as an expiration date monitoring system according to this embodiment. As shown in FIG. 20, a server 2000 comprises an expiration date holding unit 2001, a generating unit of a renewal command of an expiration date 2002 and a transmitting unit of a renewal command of an expiration date 2003.

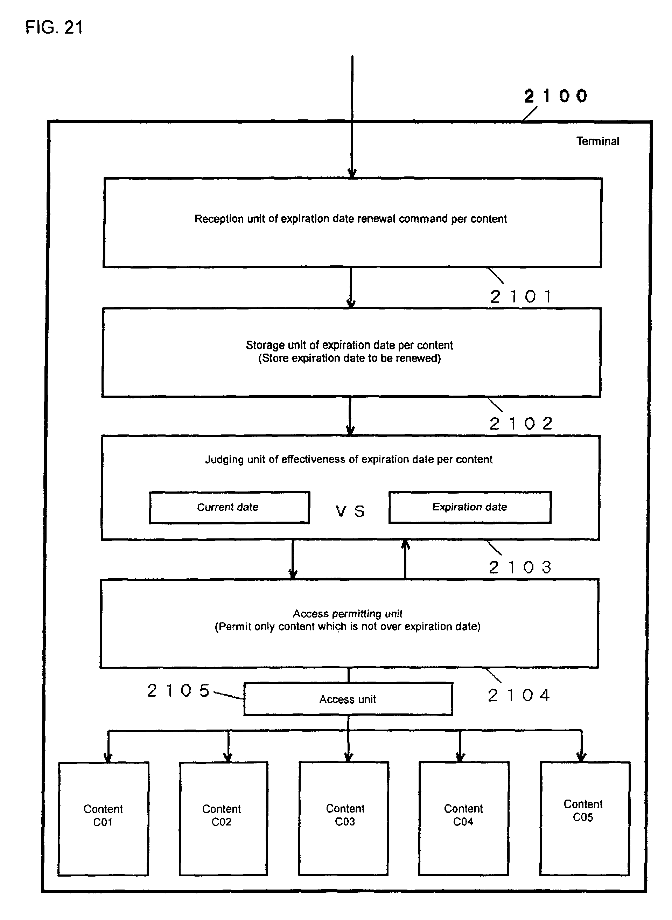

FIG. 21 shows an example of a functional block diagram of a terminal which is constructed and arranged as an expiration date monitoring system according to this embodiment. As shown in FIG. 21, this terminal 2100 comprises a reception unit of an expiration date renewal command per content 2101, a storage unit of an expiration date per content 2102, a unit for determining effectiveness of an expiration date per content 2103, an access permitting unit 2104 and an access unit 2105 or the like. The access permitting unit 2104 receives the determination at the unit for determining effectiveness of an expiration date per content 2103 and enables only the content, which is not over the expiration date, to be capable of being accessed. Therefore, for example, the access permitting unit 2104 passes a signal to enable the access to the access unit 2105 which accesses the content.

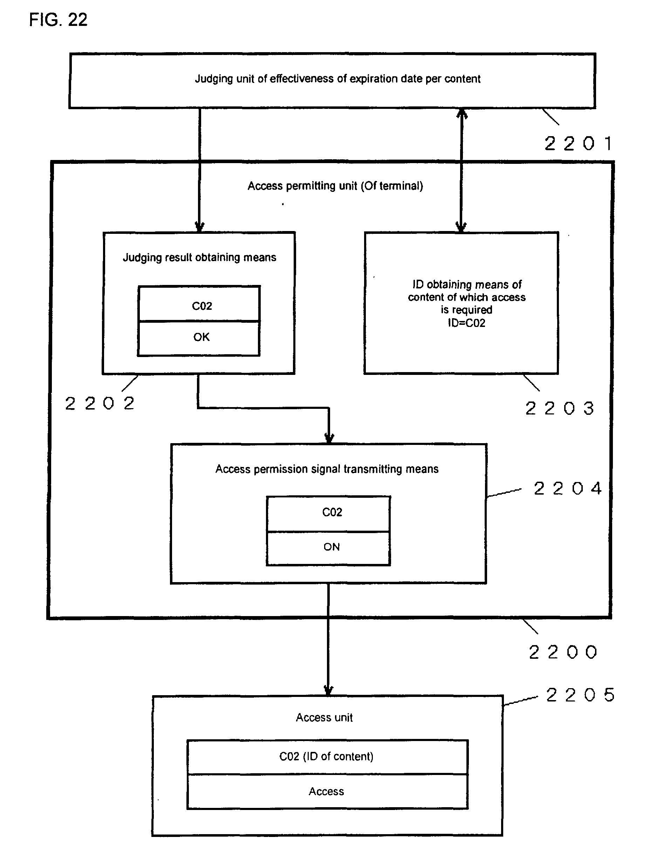

FIG. 22 shows a concept with respect to an access-permitting unit of a terminal of this expiration date monitoring system. A determination receiving means 2202 of an access permitting unit 2200 of a terminal receives the information of "OK", namely, the information that the terminal is accessible to the ID of the content, for example, C02 from a unit for determining effectiveness of an expiration date per content 2201. Subsequently, the determination receiving means 2202 passes this information to an access permission signal transmitting means 2204 and then, the access permission signal transmitting means 2204 passes this information to an access unit 2205. The access unit 2205 carries out the processing for accessing the ID of the content that is included in this information and the content that is identified by this ID. Alternatively, this processing may be carried out in such a manner that an ID obtaining means of a content of which access is required 2203 obtains the access request as the request in which the content ID is specified, the ID obtaining means of content of which access is required 2203 passes this request to the unit for determining effectiveness of an expiration date per content 2201 and then, the unit for determining effectiveness of an expiration date per content 2201 passes the determination to the determination receiving means 2202. Alternatively, in the case where the content is specified by an URL or the like, it is convenient that the accessibility to the contents per hierarchy of a domain which is expressed by a hierarchical structure, is specified by the use of the hierarchical structure of the domain so as to monitor the expiration date. Specifically, it is convenient that the accessibility to the entirety of the content, which is included in a hierarchy of a partial domain, is monitored by the use of an expression of a wild card.

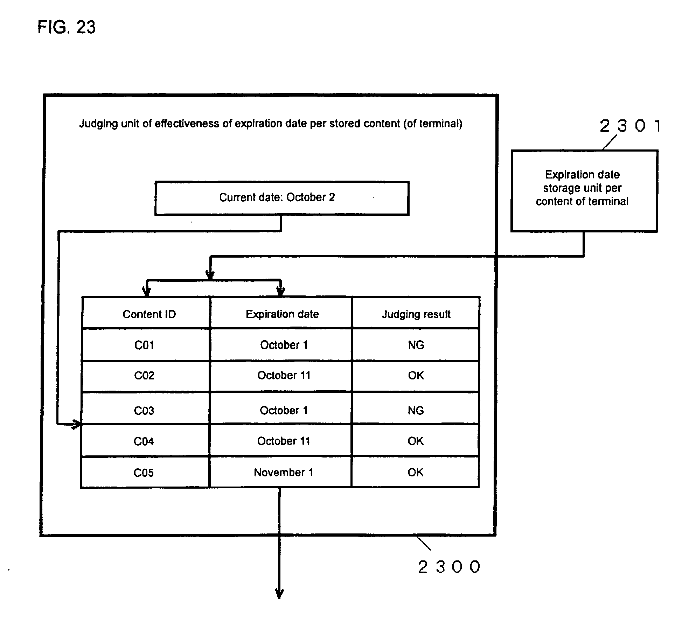

FIG. 23 is a conceptual diagram for showing a state of a processing of a unit for determining effectiveness of an expiration date per stored content in a terminal. As shown in FIG. 23, this unit for determining effectiveness of an expiration date receives the information of the expiration date of this content from an expiration date storage unit per content of a terminal, associated with the content ID from the expiration date storage unit per content of the terminal, and compares this information of the expiration date with the current date. Then, the unit for determining effectiveness of an expiration date passes the comparison result to the access-permitting unit as the determination.

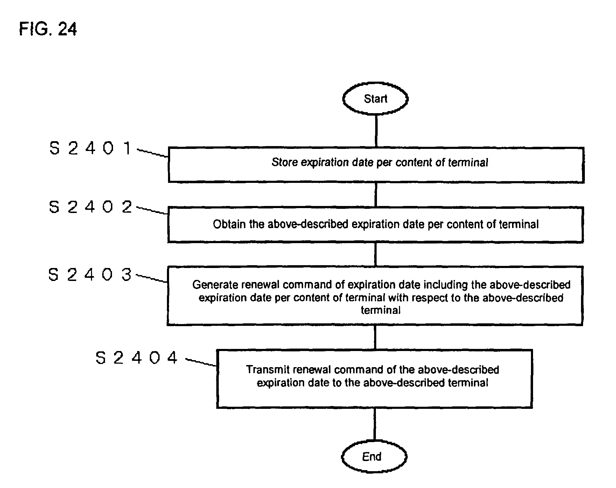

FIG. 24 is a diagram illustrating a flow of a processing to a server of this expiration date monitoring system. As shown in FIG. 24, at first, the server carries out the processing in such a manner that it stores an expiration date per content of a terminal (step S2401), then, obtains the expiration date per content of the terminal (step S2402), subsequently, generates a renewal command of an expiration date including the expiration date per content of the terminal (step S2403), and finally, transmits the renewal command of the expiration date to the terminal (step S2404).

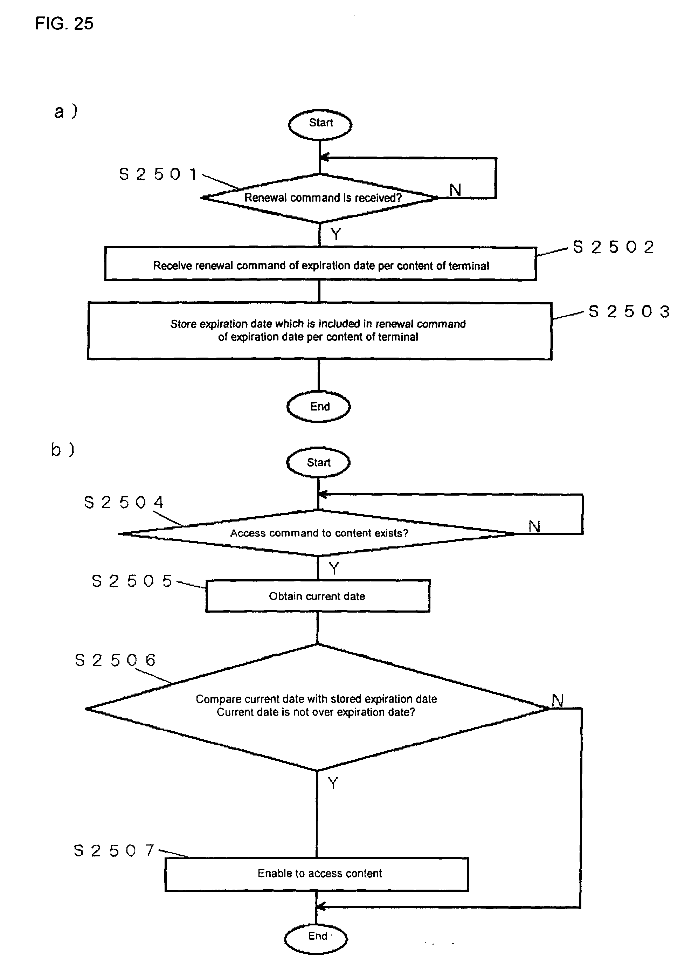

FIG. 25 is a diagram illustrating a flow of a processing in a terminal of this expiration date monitoring system. As shown in FIG. 25 a), the terminal determines whether a renewal command is received or not (step S2501) and if the renewal command is not received, the terminal stands ready to receive it. In the case where the terminal determines that the renewal command is received, the terminal receives the renewal command per content of this terminal (step S2502). Then, the terminal stores the expiration date that is included in the renewal command of the expiration date per content of the terminal (step S2503). After that, as shown in FIG. 25 b), the terminal determines whether an access command to a content exists or not (step S2504) and obtains the current data in the case where there is the access command to the content (step S2505). Then, comparing the current date with the stored corresponding expiration date, the terminal determines whether the current date is not over expiration date or not, in other words, whether the current date is within the expiration date period or not (step S2506). In the case where it is determined that the current date is within the expiration date period of the access to the content, the access to the content is enabled (step S2507). Otherwise, the terminal terminates the processing. The content is not always limited to be stored in the terminal, but may be stored in a peripheral device of the terminal or a device capable of being connected to the terminal through the circuit. The content includes a movie, a drama, a news program, music, a music video, a commercial film, a weather forecast, a variety program, a game, programs offering information and data, and all other programs capable of being viewed from the terminal.

Alternatively, according to the above-described explanation, the terminal holds the content itself. However, the terminal may store the access information as the information for accessing the content other than the content itself. In such a case, the server monitors the expiration date per access information that is stored in the terminal. However, it is also possible that the server monitors the expiration date per content and the server or the terminal holds the information for associating the content with the access information. Additionally, in the case where the terminal holds the access information, the terminal is capable of accessing the content itself from this access information. In such a case, the terminal checks the expiration date of the access information. Then, if the expiration date of the access information is within the expiration date period, the terminal is capable of accessing the content by means of the access information.

In this case, the access information means an "URL" if it comprises the data on the Internet. Alternatively, the access information may be composed of an IP address of an external device and names of a directory and a file in which the data exists. In other words, any information is available as the access information if it specifies a place where the data exists.

Alternatively, the operation for renewing the expiration date of the access information at the terminal side is the same as the above-described operation for renewing the expiration date of the content.

Additionally, it is not necessary to monitor the expiration date of all contents. In other words, it is sufficient that the partial contents may have the expiration date among many contents. In such a case, it is possible that the contents, of which expiration dates are not monitored, are activated at all times. Adversely, it may be possible that the contents other than those, of which expiration dates are monitored, are inactivated at all times. The same applies the access to the access information.

In other words, it is not necessary to monitor the expiration dates of all access information. In other words, it is sufficient that the partial contents may have the expiration date among many contents. In such a case, with respect to the access information, of which expiration date is not monitored, it is possible that the contents capable of being accessed by the access information are activated at all times. Alternatively, the reverse processing to this may be possible.

With respect to the above-described monitoring of the expiration date of the activation intended for the entirety of the terminals, the monitoring of the expiration date per function of the terminal and the monitoring of the expiration date of the content of the terminal, the terminal may periodically obtain the renewal command of the expiration date. Alternatively, due to the renewal command of the expiration date, it is also possible that a date after a regular period is defined as a date when the expiration date elapses, namely, a termination time. Further, in place of the expiration date, the number of times that the activation of the entire terminals is permitted, the number of times that the functions of the terminal are permitted and the number of times that the access to the contents of the terminal is permitted may be monitored.

In the next place, an expiration date monitoring system characterized in that the terminal further obtains the control information from the server upon receiving the expiration date renewal command will be explained below. It is possible to apply this expiration date monitoring system which obtains the control information to all of the above-described expiration date monitoring systems for carrying out the monitoring of the expiration date of the activation intended for the entirety of the terminals, the monitoring of the expiration date per function of the terminal and the monitoring of the expiration date of the content of the terminal.

In this case, the control information serves to control a terminal. The information for controlling the terminal includes various information such as a program of a screen server of the terminal, the address information of a server, of which monitoring information is obtained by the terminal and the information for deciding the execution sequence of a viewing program on the terminal or the like.

Alternatively, it is preferable that the server be provided with a control information transmitting means for transmitting the control information when the terminal requires the control information of the terminal.

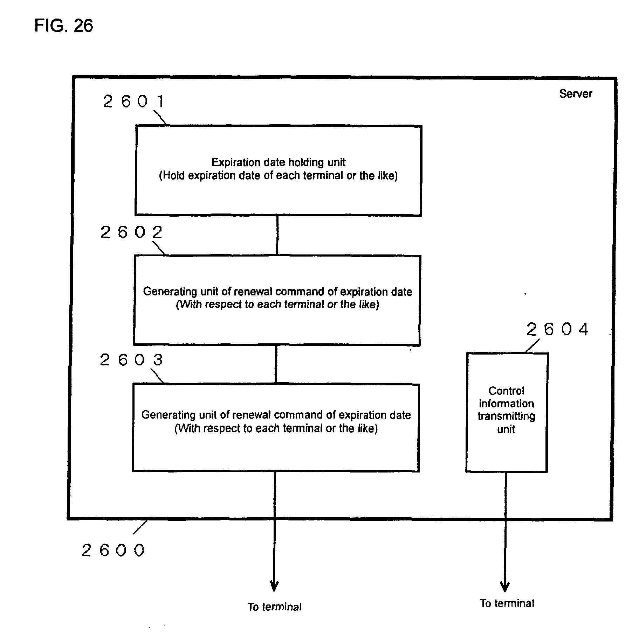

FIG. 26 is a diagram illustrating an example of a functional block of a server according to this embodiment. This server is different from the server of the above-described expiration date monitoring system for carrying out the monitoring of the expiration date of the activation intended for the entirety of the terminals, the monitoring of the expiration date per function of the terminal and the monitoring of the expiration date of the content of the terminal in that it has a control information transmitting unit 2604 shown in FIG. 26. An expiration date holding unit 2601, a generating unit of a renewal command of an expiration date 2602 and a transmitting unit of a renewal command of an expiration date 2603 are basically the same as those of the server of the above-described expiration date monitoring systems.

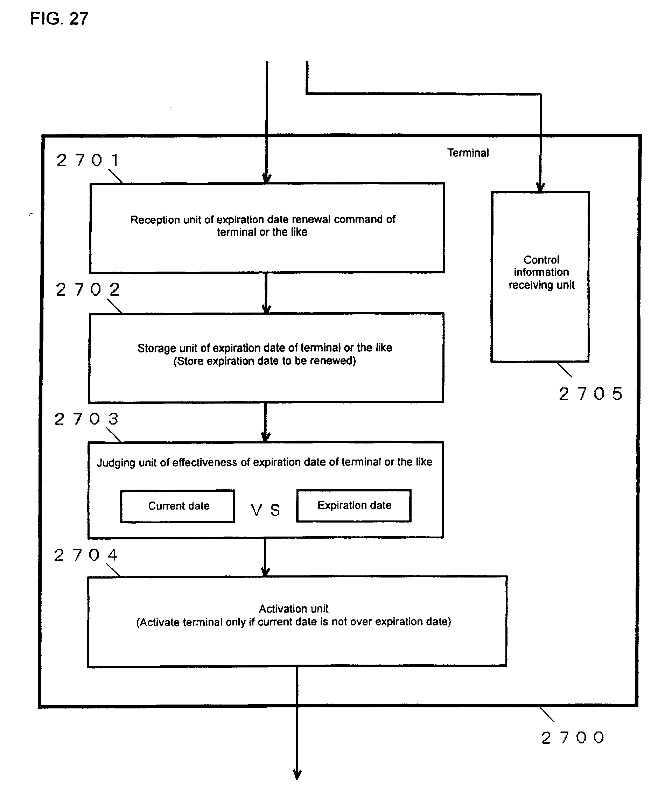

FIG. 27 is a diagram illustrating an example of a functional block of a terminal 2700 according to this embodiment. This terminal is different from the terminal of the above-described expiration date monitoring system for carrying out the monitoring of the expiration date of the activation intended for the entirety of the terminals, the monitoring of the expiration date per function of the terminal and the monitoring of the expiration date of the content of the terminal in that it has a control information receiving unit 2705 shown in FIG. 27. A reception unit of an expiration date renewal command of a terminal or the like 2701, a storage unit of an expiration date of a terminal or the like 2702 and a unit for determining effectiveness of an expiration date of a terminal or the like 2703 and an activation unit 2704 are basically the same as those of the terminal of the above-described expiration date monitoring systems.

Alternatively, it is considered that the server of the above-described expiration date monitoring system for carrying out the monitoring of the expiration date of the activation intended for the entirety of the terminals, the monitoring of the expiration date per function of the terminal and the monitoring of the expiration date of the content of the terminal is provided with a queue for storing the control information and it transmits the control information which is stored in the queue when the obtaining request of the control information is issued from the terminal.

Alternatively, it is convenient that the terminal transmits the information, which is recorded in the terminal, to the server. This is capable of being applied to all of the above-described expiration date monitoring systems for carrying out the monitoring of the expiration date of the activation intended for the entirety of the terminals, the monitoring of the expiration date per function of the terminal and the monitoring of the expiration date of the content of the terminal.

In this way, by obtaining the information recorded in the terminal by the server, it is possible to determine the tastes and preferences of a viewer of the terminal, to obtain the charge information from the viewing record and to use the information recorded in the terminal for an electronic business transaction. Further, this leads to decrease the communication costs because it is possible to use the circuit of the communication, which is released for the expiration date renewal command, as it is.

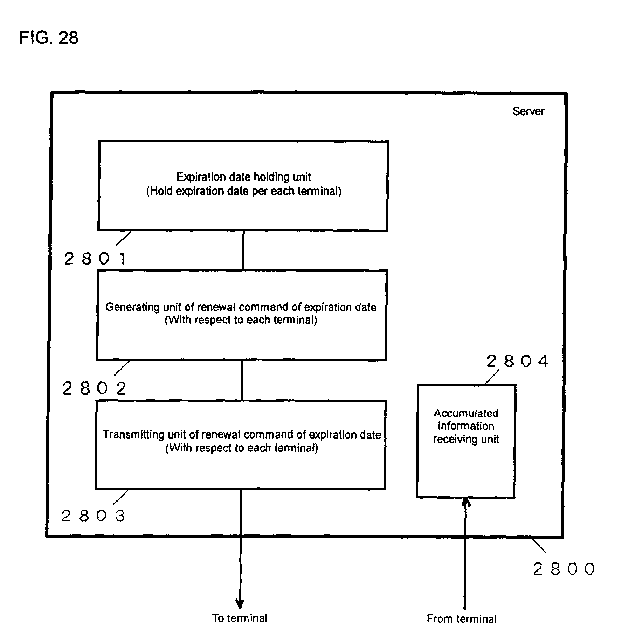

FIG. 28 is a diagram illustrating an example of a functional block of a server 2800 according to this embodiment. This server is constructed and arranged in such a manner that a recorded information receiving unit 2804 is added to a conventional server of the above-described expiration date monitoring systems for carrying out the monitoring of the expiration date of the activation intended for the entirety of the terminals, the monitoring of the expiration date per function of the terminal and the monitoring of the expiration date of the content of the terminal. An expiration date holding unit 2801, a generating unit of a renewal command of an expiration date 2802 and a transmitting unit of a renewal command of an expiration date 2803 are the same as those in the conventional server.

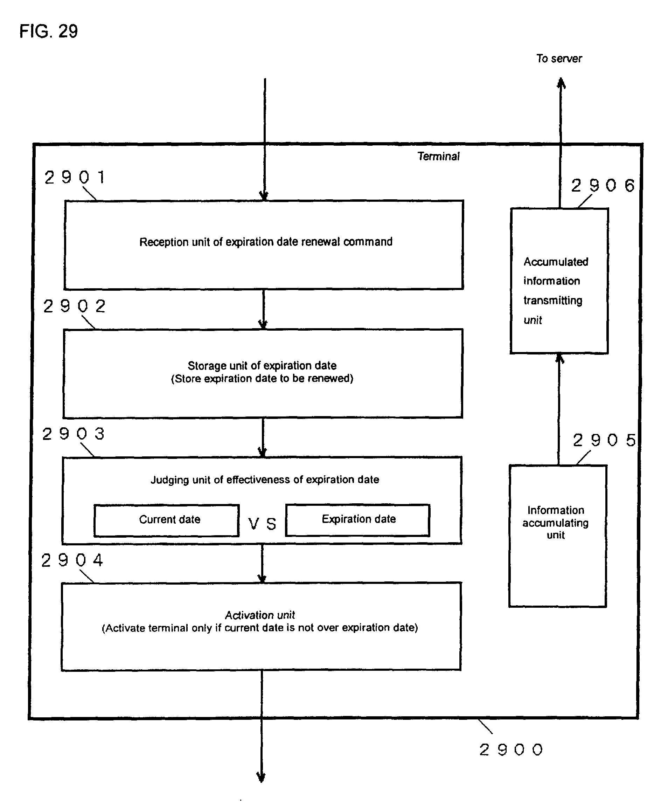

FIG. 29 is a diagram illustrating an example of a functional block of a terminal 2900 according to this embodiment. This terminal is constructed and arranged such that an information recording unit 2905 and a recorded information transmitting unit 2906 are added to a conventional terminal of the above-described expiration date monitoring systems for carrying out the monitoring of the expiration date of the activation intended for the entirety of the terminals, the monitoring of the expiration date per function of the terminal and the monitoring of the expiration date of the content of the terminal. A reception unit of expiration date renewal command 2901, a storage unit of expiration date 2902, a unit for determining effectiveness of an expiration date 2903 and an activation unit 2904 are basically the same as those in the conventional terminal.

Alternatively, the terminals to be used for all of the above-described expiration date monitoring systems effectively function by obtaining the expiration date renewal commands from a recording medium or the like even in a state where they are not connected to the servers, so that it is advantageous that only such a terminal is capable of monitoring the activation of the terminal itself, the activation of the function and the access to the content by itself.

Additionally, it is convenient that the log information indicating when, by whom and how long, what contents are viewed at the terminal, is transmitted to a server for the monitoring of the expiration date, a server for processing the information for charging at the terminal and a server for monitoring a viewer's tastes and preferences for a program or the like at the terminal.

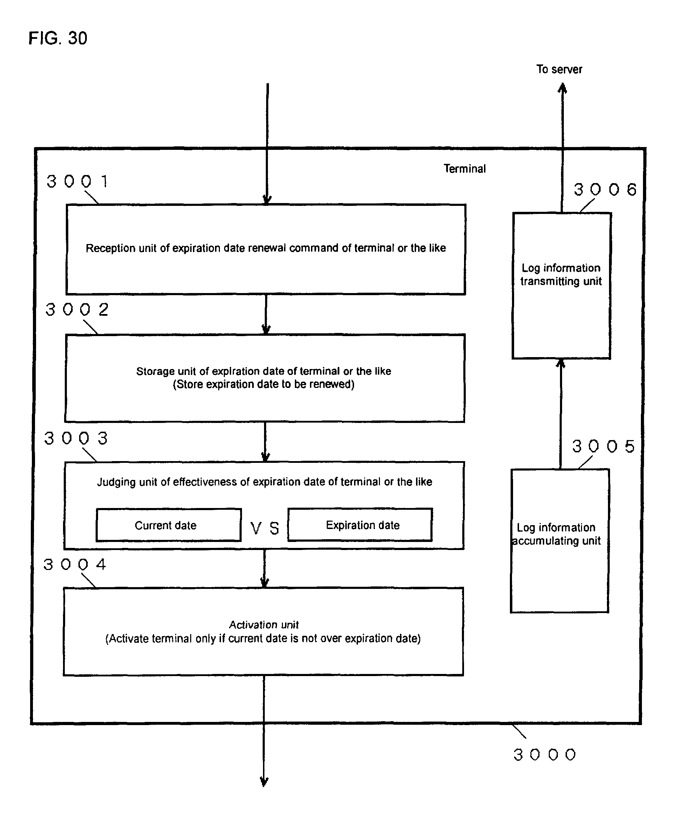

FIG. 30 is a diagram illustrating an example of a functional block of a terminal 3000 which can transmit such log information to a server according to this embodiment. This terminal is constructed and arranged as a log information recording unit 3005 and a log information transmitting unit 3006 are added to the conventional terminal of the expiration date monitoring systems for carrying out the monitoring of the expiration date of the activation intended for the entirety of the terminals, the monitoring of the expiration date per function of the terminal and the monitoring of the expiration date of the content of the terminal. Other units, namely, a reception unit of expiration date renewal command of a terminal or the like 3001, a storage unit of an expiration date of a terminal or the like 3002, a unit for determining effectiveness of an expiration date of a terminal or the like 3003 and an activation unit 3004 are basically the same as those in the conventional terminal.

Alternatively, the servers to be used for all of the above-described expiration date monitoring systems are capable of monitoring the expiration dates of the terminals by recording the expiration date renewal commands in a recording medium or the like even in a state where they are not connected to the terminals, so that it is advantageous that such a server is capable of monitoring the activation of the terminal itself, the activation of the function and the access to the content by itself.

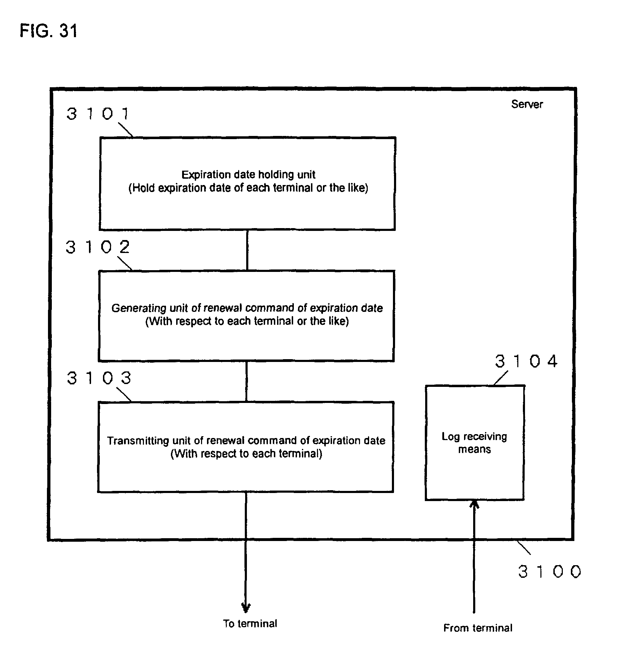

FIG. 31 is an example of a functional block diagram of a server 3100 characterized in that the server 3100 is further provided with a log-receiving unit for receiving the log information to be transmitted from the terminal. This server is constructed and arranged such that a receiving unit is added to the conventional server and other units, namely, an expiration date holding unit 3101, a generating unit of a renewal command of an expiration date 3102 and a transmitting unit of a renewal command of an expiration date 3103 are basically the same as those in the conventional server.

Additionally, the unit for determining effectiveness of an expiration date of the terminal of the above-described expiration date monitoring system for carrying out the monitoring of the expiration date of the activation intended for the entirety of the terminals, the monitoring of the expiration date per function of the terminal and the monitoring of the expiration date of the content of the terminal is provided with a date information obtaining means for obtaining the current date. Then, the means for determining effectiveness of an expiration date transmits the current date which is obtained from the date information obtaining means and the function which is designated by the function activation means to a security module (i.e., a functional unit which stores an identification code for certifying a viewer therein) which is provided in an IC card or the like when the function activation means designates the function, and the determination, whether this function is within the expiration date or not, is required. Then, the checking means may determine only in the case where the determination is allowed by the foregoing security means, or the unit for determining effectiveness of an expiration date may be provided in this security module.

Further, the date information obtaining means may obtain the current data from the time information, which is included in the digital broadcast information.

Alternatively, there is an embodiment such that, upon executing the content or the application which is received from the external of a terminal, it is determined whether the content or the function is within the expiration date on the basis of the renewal command of the expiration date and its determination is used as a parameter for executing the content or the application. The renewal command of the expiration date is a command to renew the expiration date of the content or the function that is received from the server by the terminal. The renewed expiration date is stored in a unit for determining effectiveness of expiration date per content 2300 and a unit for determining effectiveness of expiration date per function 1600 and then, it is determined whether respective contents and functions are within the expiration date or not. A parameter for executing the content or the application is a means for referring to the determination whether respective contents or functions are within the expiration dates or not upon executing the content or the application. For example, it is determined whether they are within the expiration date or not by referring to a parameter in a normal programming language.

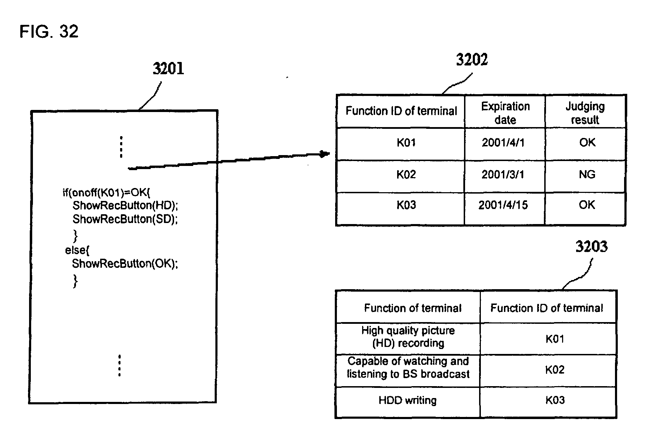

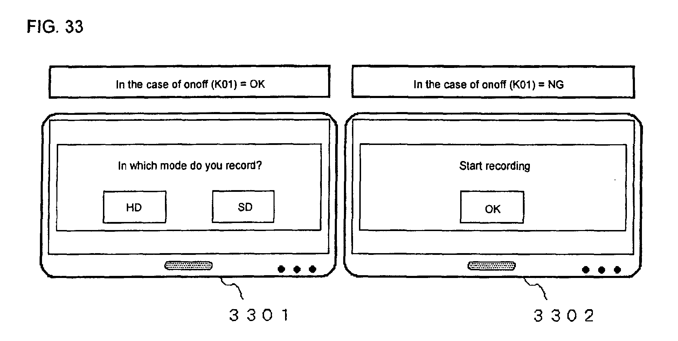

FIG. 32 shows an example for determining whether a function is within the expiration date and its determination is used as a parameter. A table 3202 shows an example of tables which are monitored by the unit for determining effectiveness per function 1600 and in this table, an expiration date with respect to an ID of a function and the determination whether the function is within the expiration date or not are stored. In order to find what function is represented by respective function ID, a corresponding relation between the functions and the function ID is represented. A table 3201 represents a script (for example, ECMAScript of BML (Broadcasting Mark-up Language)) in a content received from the external of the terminal and a piece of a program in which the operation of the application is described. Due to a function call of ON/OFF (K01), a function of ON/OFF is executed and due to this execution, a parameter in order to obtain the determination whether a function in association with a function ID of K01, which is passed over as an argument, is within the expiration date or not is referred to, so that its determination is obtained. According to the table 3202, K01 corresponds to a function of a high-quality picture (HD) recording. If this function is within the expiration date, namely, if a value of OK is obtained by a function call of ON/OFF (K01), ShoeRecButton (HD) to display a button for performing the high-quality picture recording and ShowRecButton (SD) to display a button for performing a standard quality picture recording are called. On the contrary, if the function of the high-quality picture (HD) recording is not within the expiration date, namely, a value which is not OK is obtained by calling a function of ON/OFF (K01), the standard quality picture recording is only available, so that the OK button is only displayed by ShowRecButton (OK). As a result, as shown in FIG. 33, if it is possible to obtain a value of OK by calling a function of ON/OFF (K01), as shown in 3201, a button of "HD" for recording in a high-quality mode and a button of "SD" for recording in a standard quality mode are displayed together with a message of "which mode do you record a picture in?". On the contrary, if a value of NG (i.e., not OK) is obtained by calling a function of ON/OFF (K01), as shown in 3302, a button of "OK" is only displayed together with a message "start recording".

In this way, the content or the application can use the determination whether the function to be used by them is within the expiration date or not as a parameter, so that a function which is not within the expiration date is not displayed on a menu. As a result, the user does not select the function, which is not within the expiration date again, so that an error message is not displayed, and it is not necessary for the user to select the function within the expiration date again. Therefore, the operation of the function is improved.

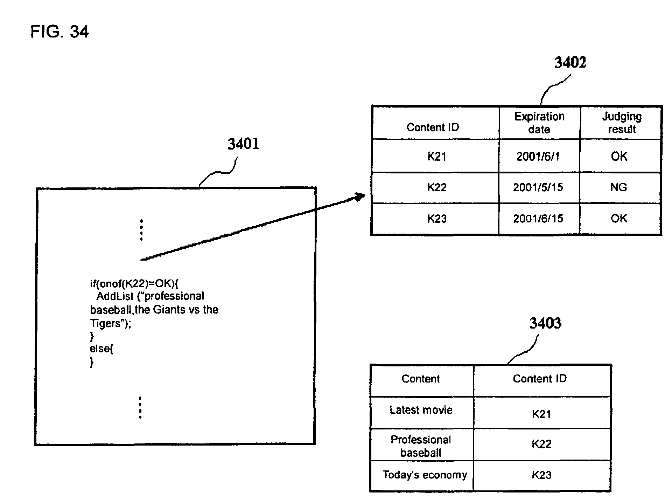

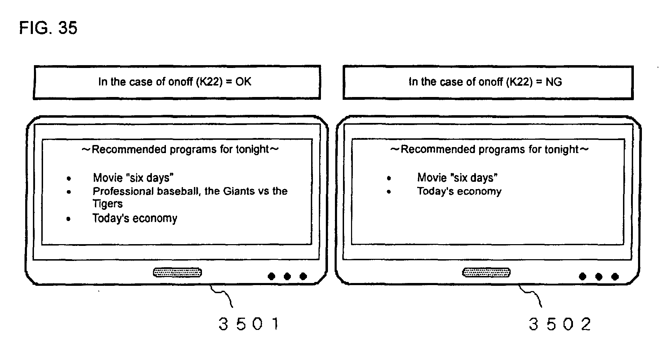

FIG. 34 shows an example such that it is determined whether a content is within an expiration date and its determination is used as a parameter. A table 3402 represents a table for associating a content ID to be monitored by the unit for determining effectiveness of expiration date per content 2300, its expiration date and a determination whether the content is within the expiration date or not with each other. A table 3403 represents what content a content ID corresponds to. A table 3401 represents a script of a content or a program of an application which refers to a determination of the table 3402 by the use of a parameter. In the table 3403, K22 corresponds to a professional baseball. If a value of OK is obtained by calling a function of ON/OFF(K22), the function executes AddList ("professional baseball, the Giants vs the Tigers"). As a result, as shown in FIG. 35, if a value of OK is obtained by calling a function of ON/OFF (K22), as shown in 3201, "professional baseball, the Giants vs the Tigers" is displayed on a menu of "tonight's recommended program". Further, if a value of NG (i.e., not OK) is obtained by calling a function of ON/OFF (K22), as shown 3502, "tonight's recommended program", in which "professional baseball, the Giants vs the Tigers" is not displayed, is displayed.

In this way, the determination whether the content is within the expiration date or not is capable of being used as a parameter, so that the content, which is not within the expiration date, is not displayed on the menu. As a result, the user does not select the content, which is not within the expiration date, so that an error message is not displayed, and it is not necessary for the user to select the content within the expiration date again. Therefore, the operation of the content is improved.

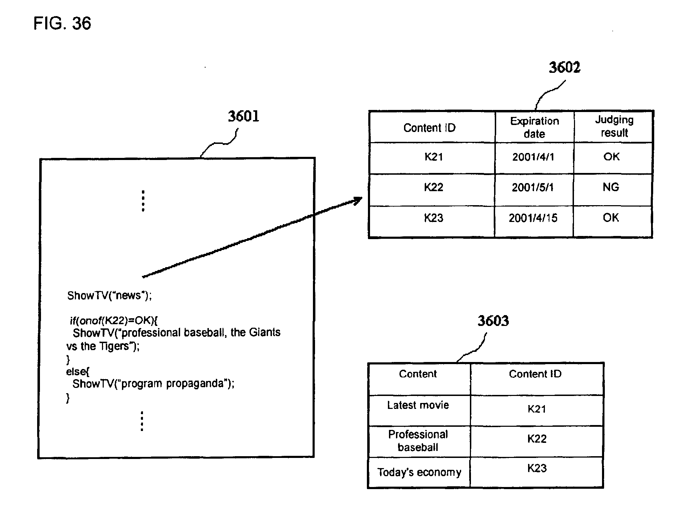

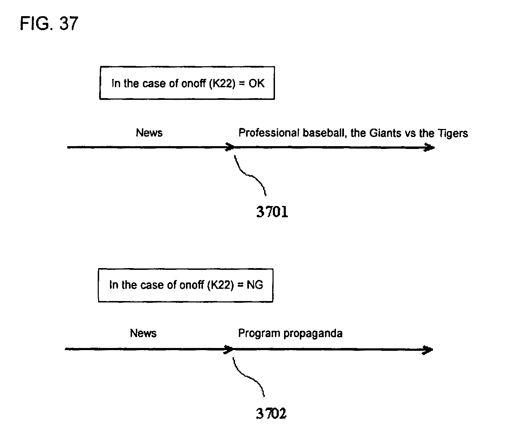

FIG. 36 shows another example such that it is determined whether a content is within an expiration date and its determination is used as a parameter. A table 3602 represents a table for associating a content ID to be monitored by the unit for determining effectiveness of expiration date per content 2300, its expiration date and a determination whether the content is within the expiration date or not with each other. A table 3603 represents what content a content ID corresponds to. A table 3601 represents a script of a content or a program of an application which refers to a determination of the table 3602 by the use of a parameter. In the table 3403, K22 corresponds to a professional baseball. If a value of OK is obtained by calling a function of ON/OFF (K22), ShowTV ("professional baseball, the Giants vs the Tigers") is executed. On the contrary, a value other than OK is obtained by calling a function of ON/OFF (K22), ShowTV ("program propaganda") is executed. As a result, as shown in FIG. 37, if a value of OK is obtained by calling a function of ON/OFF (K22), at a point of time of 3701, a condition that the news image has been displayed so far is changed into a condition that the content of "professional baseball, the Giants vs the Tigers" is displayed. On the other hand, if a value of NG (i.e., a value other than OK) is obtained by calling a function of ON/OFF (K22), at a point of time of 3702, a condition that the news image has been displayed so far is changed into a condition that the content of "program propaganda" is displayed.

In this way, the determination whether the content is within the expiration date or not is capable of being used as a parameter, so that the content, which is not within the expiration date, is not displayed. As a result, other content within the expiration date is displayed, so that the display seems natural for the user.

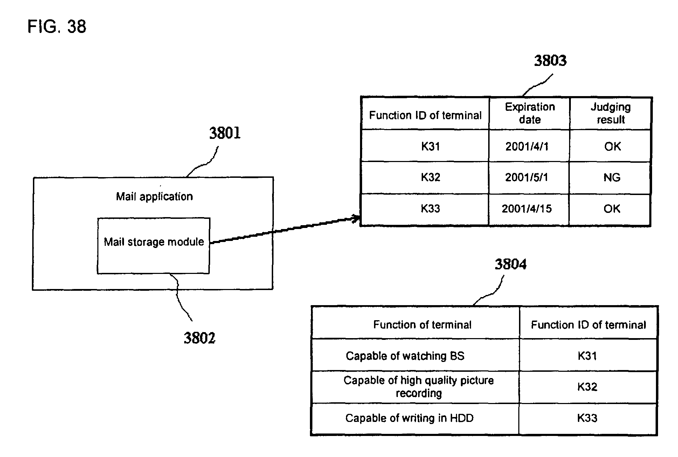

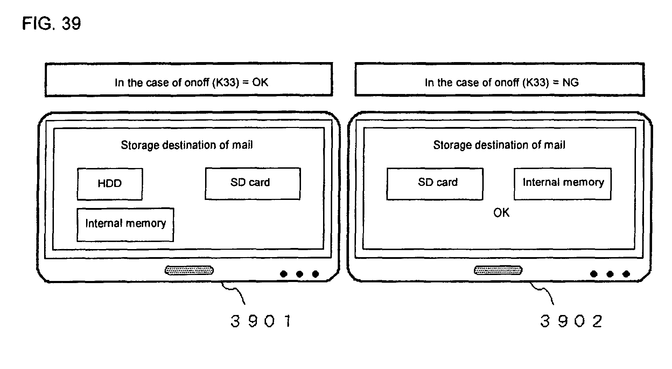

FIG. 38 shows another example such that it is determined whether a function is within an expiration date or not and its determination is used as a parameter. A table 3802 represents an example of tables that the unit for determining of effectiveness of expiration date per function 1600 monitors. In this table, an expiration date for an ID of a function and a determination whether the function is within the expiration date or not are stored. In order to find what function is represented by respective function ID, a corresponding relation between the functions and the function ID is represented in the table 3803. In FIG. 38, a mail storage module 3802 in a mail application 3801 refers to the determination whether the function of K33 is within the expiration date or not as a parameter. According to the table 3804, K33 represents a function capable of writing in a HDD. If the function of K33 is within the expiration date, namely, if a value of OK is obtained by calling a function of ON/OFF (K33) as shown in FIG. 39, the mail storage module 3802 displays a screen indicating that the HDD is defined as one option of a storage place of a mail as 3901. On the contrary, in the case where a value of NG (i.e., a value other than OK) is obtained by calling a function of ON/OFF (K33), the mail storage module 3802 displays a screen of 3902 indicating that the HDD is not defined as one option of a storage place of a mail.

In this way, in the execution of the application, the determination whether the function to be used is within the expiration date or not is capable of being used as a parameter, so that the function which is not within the expiration date is not displayed on the menu. As a result, the user does not select the function, which is not within the expiration date, so that an error message is not displayed and the user does not select the function, which is within the expiration date again. Therefore, the operation of the function is improved.

### Industrial Applicability

As being obvious from the above description, the expiration date monitoring system according to the present invention can set an expiration date per function of a terminal, so that the expiration date monitoring system enables the user to recognize the expiration date again in the process that a function, of which expiration date expires, has been inoperative sequentially and further, the expiration date monitoring system enables the user to be conscious of the renewal of the expiration date. As a result, it is possible to collect the fee certainly for a pay terminal function.

Alternatively, as a part of the monitoring of the expiration date, it is possible to secure a communication opportunity of making a call from a terminal side to a server side, so that it becomes possible that the server collects the data of the terminal by the use of this opportunity and the necessary software is transferred from the server to the terminal. As a result, it is possible to offer a better service to the terminal.

Alternatively, the determination whether the function or the content is within the expiration date or not is capable of being used as a parameter for executing the content or the application, so that the user can only select the function or the content within the expiration date or it is possible to present only the function or the content within the expiration date to the user. Therefore, the operation of the function or the content is improved for the user.

## Claims

1. An expiration date monitoring system, comprising:
a terminal; and a server for monitoring an expiration date of the terminal, wherein the server monitors the expiration date for at least one function of the terminal and the terminal periodically receives a renewal command for the expiration date corresponding to said at least one function, whereby the terminal activates only a function for which the corresponding expiration date has not expired.

2. An expiration date monitoring system, comprising:
a terminal; and a server for monitoring an expiration date of this terminal, wherein the terminal periodically accesses the server through a communication circuit, obtains from the server a renewal command of the expiration date from the server and stores the renewed expiration date, whereby the terminal activates only a function for which the corresponding expiration date has not expired.

3. An expiration date monitoring system according to claim 1, wherein termination time after a regular period is designated by the renewal command of the expiration date.

4. An expiration date monitoring system according to claim 1, wherein said renewal command includes a number of times that at least one of said function can be accessed.

5. An expiration date monitoring system according to claim 2, wherein the terminal obtains the control information from the server through the communication circuit in the access.

6. An expiration date monitoring system according to claim 5, wherein the server is provided with a queue for storing the control information and the server transmits to the terminal the control information which is stored in the queue, when the obtaining request of the control information is issued from the terminal.

7. An expiration date monitoring system according to claim 2, wherein the terminal transmits to the server the information which is recorded in the terminal through the communication circuit in the access.

8. A terminal which is used for the expiration date monitoring system according to claim 2, comprising:
an expiration date renewal control means for controlling a periodical renewal of the expiration date;
an expiration date renewal communication means for receiving an instruction of the expiration date renewal control means, accessing the server through the communication circuit and obtaining a renewal command of the expiration date;
an expiration date checking means for checking the expiration date of each function of the terminal;
a function activation means for activating each function of the terminal after obtaining the expiration date has been checked; and
a security module for storing an expiration date for each function of the terminal, which is renewed on the basis of a renewal command of the expiration date which is obtained from the server, wherein the expiration date checking means passes the function which is designated by the function activation means to the security module when the function activation means designates a function and requires to check the expiration date, and then it requires to determine the suitability of the expiration date of the security module and when this determination indicates that the expiration date thereof is not elapsed, it gives the checking result of the expiration date to the function activation means.

9. A terminal according to claim 8, comprising a date information obtaining means for obtaining a current time, wherein the expiration date checking means passes the current time which is obtained from the date information obtaining means and the function which is designated by the function activation means to the security module when the function activation means designates a function and requires to check the expiration date, and determine if the expiration date has passed.

10. A terminal according to claim 9, wherein the date information obtaining means obtains the current time from the time information that is included in the digital broadcast information.

11. A terminal according to claim 8, comprising a control information obtaining means for obtaining the control information from the server, wherein the control information obtaining means receives the instruction from the expiration date renewal control means and obtains the control information from the server through the communication circuit.

12. A terminal according to claim 8, comprising a log information transmitting means for transmitting the log information to the server, wherein the log information transmitting means receives the instruction from the expiration date renewal control means and transmits the log information to the server through the communication circuit.

13. A server which is used for the expiration date monitoring system according to claim 2 comprising:
a contractant information data base for recording the information of an expiration data per function of each terminal; and
an expiration date renewal command transmitting means for checking that the terminal satisfies a condition of the usage when the terminal issues a renewal command obtaining request of the expiration date through a communication circuit, and generates a renewal command of the expiration date to transmit it.

14. A server according to claim 13, comprising a control information transmitting means for transmitting the control information when an obtaining request of the control information is issued from the terminal through the communication circuit.

15. A server according to claim 14 comprising a queue for storing the control information, wherein the control information transmitting means transmits the control information which is stored in the queue, when the obtaining request of the control information is issued from the terminal.

16. A server according to claim 13, comprising a log receiving means for receiving the log information which is transmitted from the terminal through the communication circuit.

17. An expiration date monitoring system, comprising:
a terminal; and a server for monitoring an expiration date of this terminal, wherein the server monitors the expiration date of the terminal and the terminal receives a renewal command of the expiration date from the server to store the renewed expiration date, so that the terminal decides the suitability of the activation on the basis of the expiration date.

18. An expiration date monitoring system, comprising:
a terminal; and a server for monitoring an expiration date of this terminal, wherein the server monitors the expiration date for each function of the terminal and the terminal receives a renewal command of the expiration date for at least one function from the server to store the renewed expiration date of said at least one function, so that the terminal decides the suitability of the activation of the function on the basis of the expiration date.

19. An expiration date monitoring system, comprising:
a terminal for storing a content; and a server for monitoring an expiration date of this terminal, wherein the server monitors the expiration date for each content which is stored by the terminal, and the terminal receives a renewal command of the expiration date for each content from the server to store the renewed expiration date of each content, so that the terminal decides the suitability of the access to the content on the basis of the expiration date.

20. An expiration date monitoring system, comprising:
a terminal for storing the access information for accessing a content; and a server for monitoring an expiration date of this terminal, wherein the server monitors the expiration date for each access information which is stored by the terminal, and the terminal receives a renewal command of the expiration date for each access information from the server to store the renewed expiration date of each access information, so that the terminal decides the suitability of the access to the content which is capable of being accessed by the access information on the basis of the expiration date.

21. An expiration date monitoring system according to claim 17, wherein the terminal periodically obtains a renewal command of an expiration date.

22. An expiration date monitoring system according to claim 17, wherein a termination time after a regular period is designated by the renewal command of the expiration date.

23. An expiration date monitoring system according to claim 17, wherein a number of times said terminal can be accessed is designated by the renewal command of the expiration date.

24. An expiration date monitoring system according to claim 17, wherein the terminal further obtains the control information from the server during access of the terminal.

25. An expiration date monitoring system according to claim 24, wherein the server is provided with a queue for storing the control information and the server transmits to the terminal the control information which is stored in the queue, when the obtaining request of the control information is issued from the terminal.

26. An expiration date monitoring system according to claim 17, wherein the terminal transmits to the server the information which is recorded in the terminal during access of the terminal.

27. A terminal which is used for the expiration date monitoring system according to claim 17.

28. A terminal according to claim 27, further comprising a log information transmitting means for transmitting the log information to the server.

29. A server which is used for the expiration date monitoring system according to claim 17.

30. A server according to claim 29 further comprising a log receiving means for receiving log information which is transmitted from the terminal.

31. An expiration date monitoring system, wherein the expiration date monitoring system determines whether a content or an application which is received by a terminal through the broadcast or a communication is within an expiration date on the basis of a renewal command of the expiration date and the expiration date monitoring system is capable of using the determination as a parameter for executing the content or the application.

32. A terminal which accesses a server and is controlled by the server, comprising a control information obtaining means for obtaining the control information from the server, wherein the control information obtaining means obtains the control information from the server at a predetermined time.

33. A server comprising a control information obtaining means for instructing a terminal to obtain the control information when the terminal accesses the server.

34. A terminal according to claim 32, wherein the control information obtaining means receives the instruction from the control information obtaining means to obtain the control information from the server.

35. A terminal according to claim 32, wherein the terminal accesses a server through a telephone line and the control information obtaining means obtains the control information from the server in the case where the telephone line is being connected to the server.

36. A terminal according to claim 32, wherein the terminal accesses a server through a telephone line and the control information obtaining means obtains the control information from the server in the case where the telephone line is being connected to the server and the telephone line has been in no communication condition for not less than a predetermined time.

37. A server according to claim 33, comprising a queue for storing the control information and a control information transmitting means, wherein the control information transmitting means instructs a terminal to obtain the control information, which is stored in the queue, when the terminal accesses the server.

38. A terminal for accessing a server, comprising a log information transmitting means for transmitting the log information to the server, wherein the log information transmitting means transmits the log information to the server at a predetermined time.

39. A server comprising a log information transmission instructing means for instructing a terminal to transmit the log information to the server when the terminal accesses the server.

40. A terminal according to claim 38, wherein the log information transmitting means receives the instruction from the log information transmission instructing means to transmit the log information to the server.

41. A terminal according to claim 38, wherein the terminal accesses a server through a telephone line and the log information transmitting means transmits the log information to the server when the telephone line is connected to the server.

42. A terminal according to claim 38, wherein the terminal accesses a server through a telephone line and the log information transmitting means transmits the log information to the server when the telephone line is connected to the server and the telephone has been in no communication condition for not less than a predetermined time.
